# EUROPÄISCHE PATENTSCHRIFT

(11) **EP 3 981 673 B1**
(45) Veröffentlichungstag und Bekanntmachung des Hinweises auf die Patenterteilung: **18.06.2025**
(21) Anmeldenummer: 21201126.6
(22) Anmeldetag: 06.10.2021
(51) Int. Cl.: B62H 3/02, B62H 3/08, B65D 19/06, B65D 19/44, B65D 85/68

(54) **VERPACKUNGSVORRICHTUNG FÜR EIN ZWEIRAD UND VERPACKUNGSSYSTEM MIT EINER VERPACKUNGSVORRICHTUNG**
PACKAGING DEVICE FOR A TWO-WHEELED VEHICLE AND PACKAGING SYSTEM COMPRISING A PACKAGING DEVICE
DISPOSITIF D'EMBALLAGE POUR UN DEUX-ROUES ET SYSTÈME D'EMBALLAGE DOTÉ D'UN DISPOSITIF D'EMBALLAGE

(30) Priorität: 07.10.2020 DE 102020126294
(43) Veröffentlichungstag der Anmeldung: 13.04.2022
(73) Patentinhaber: Mondi AG, 1030 Wien (AT)
(72) Erfinder: Sieber, Robert, 91589 Aurach (DE)
(74) Vertreter: DTS Patent- und Rechtsanwälte PartmbB

(56) Entgegenhaltungen:
- DE-A1- 19 731 868
- DE-U1- 202009 005 489
- DE-U1- 202020 104 051
- ES-A1- 2 351 814
- JP-A- 2003 040 385
- JP-A- 2009 227 285
- US-A- 2 629 487
- US-A1- 2013 270 202

## Beschreibung

Die vorliegende Offenbarung betrifft eine Verpackungsvorrichtung für ein Zweirad, insbesondere für ein Motorrad.

Die vorliegende Erfindung betrifft ein Verpackungssystem für ein Zweirad, insbesondere für ein Motorrad, mit einer Verpackungsvorrichtung.

Verpackungsvorrichtungen können beispielsweise eingesetzt werden, um fabrikneue Zweiräder, insbesondere Motorräder, vom Hersteller zum Händler und/oder zum Endkunden zu liefern. Neben einer zuverlässigen Verpackung des Zweirads ist zur Einsparung von Transportkosten ein geringes Packmaß von Vorteil. Hierzu ist es beispielsweise bekannt, das Zweirad teilweise zerlegt zu verpacken. Beispielsweise wird das Vorderrad vom Zweiradrahmen entfernt, wohingegen das Hinterrad am Rahmen montiert bleibt. Alternativ können beide Räder montiert bleiben, um die Rüstzeit zu verkürzen. Der Lenker kann bei Fahrrädern quer gestellt oder bei Fahrrädern und Motorrädern abgenommen werden. Weitere Zweiradteile und/oder Zubehör- oder Ausrüstungsgegenstände werden üblicherweise zusammen mit dem Zweirad versandt.

Beim Verpacken von Motorrädern ist deren beträchtliches Gewicht zu berücksichtigen, das beispielsweise ungefähr 100 kg bis 200 kg beträgt. Um eine stabile Fixierung zu erzielen, können Motorräder mittels Spanngurten, die am Rahmen angreifen, auf Anhängern oder ähnlichen Aufnahmevorrichtungen fixiert werden. Dies erfordert einen beträchtlichen Aufwand und erschwert die Handhabung. Unerwünscht ist außerdem, wenn Spanngurte an bestimmten Motorradteilen wie beispielsweise Hydraulikzylindern einer Federgabel angreifen, da die Gefahr der Beschädigung besteht. Bekannte Motorradverpackungen erfordern, das Motorrad aufgrund des hohen Gewichts mittels eines Krans in den Verpackungsbehälter zu heben, was neben dem maschinellen Aufwand die Handhabung erschwert.

Verpackungsvorrichtungen für Zweiräder und speziell Fahrräder sind beispielsweise in der EP 3 611 106 A1, der DE 20 2018 102 422 U1, der DE 20 2009 005 489 U1 und der DE 20 2020 104 051 U1 beschrieben. Ein Gestell zur Aufnahme mehrerer seitlich nebeneinander angeordneter Motorräder ist in der JP 2002-145378 A beschrieben. Die US 2013/0270202 A1 offenbart eine Aufstelleinrichtung für ein Motorrad, die für das Vorderrad und das Hinterrad jeweils auf einer Bodenfläche aufgestellte Stützen umfasst. Die hintere Stütze kann verschwenkt und dadurch eine Nabe des Hinterrades über eine Hebelwirkung angehoben werden.

In der DE 197 31 868 A1 ist ein wiederverwertbarer Verpackungsbehälter mit Stützteilen für Achsen eines Motorrads beschrieben. Die Komponenten des Verpackungsbehälters sind zu diesem Zweck aus schlagfestem Kunststoffmaterial, aus Metallblech mit entsprechenden Versteifungen, aus Aluminiumwänden oder ähnlichem Material gefertigt.

Die US 2,629,487 A1 offenbart einen Verpackungsbehälter für ein Fahrrad mit aus einem Papiermaterial gefertigten Fixierteilen, die über die Räder gestülpt und zwischen einander gegenüberliegenden Seitenwänden des Verpackungsbehälters formschlüssig gehalten sind. Zusätzlich erfolgt eine Abstützung des Rahmens nach unten im Bereich des Tretlagers.

Fixierteile zu einer jeweiligen seitlichen Fixierung des Rahmens sind bei Verpackungsbehältern für Motorräder vorgesehen, die in der gattungsgemäßen JP 2009-227285 A oder in der JP 2003-040385 A beschrieben sind.

Die ES 2 351 814 A1 beschreibt einen Verpackungsbehälter für ein Fahrrad, bei Achsstummel an der Vorderradachse in einen Aufnahmeschlitz eines auf dem Boden des Verpackungsbehälters stehenden Stützkörpers eingeführt werden können.

Aufgabe der vorliegenden Erfindung ist es ein Verpackungssystem bereitzustellen, das ein zuverlässiges Verpacken des Zweirads bei einfacherer Handhabung ermöglicht.

Diese Aufgabe wird durch ein erfindungsgemäßes Verpackungssystem mit den Merkmalen von Anspruch 1 gelöst.

Die Verpackungsvorrichtung umfasst zwei auf dem Boden angeordnete, in der Querrichtung voneinander beabstandete Stützteile. Das Rad, bei dem es sich vorzugsweise um ein Hinterrad des Zweirads handelt, kann zwischen den Stützteilen positioniert werden. Der Stützkörper kann auf dem jeweiligen Stützelement des Stützteils aufliegen. Eine Auflagekraft des Stützkörpers kann über das Stützteil auf den Boden abgeleitet werden. Durch die Positionierung der Stützteile seitlich neben dem Rad kann zusätzlich zur Abstützung nach unten eine Querstabilisierung des Rades und damit des Zweirades erfolgen.

Der Stützkörper kann beispielsweise als Stange oder Rohr ausgestaltet sein. Vorgesehen sein kann, insbesondere bei Motorrädern, dass die Stange oder das Rohr durch eine Hohlachse des Hinterrades hindurchgeführt und dadurch konstruktiv einfach in einer vorgegebenen Position am Rad angeordnet ist. Dies erlaubt bei einer einfachen Handhabung der Verpackungsvorrichtung und des Stützkörpers eine zuverlässige Abstützung.

Positions- und Orientierungsangaben wie beispielsweise "oben", "unten", "oberhalb" oder "unterhalb" oder dergleichen sind vorliegend auf einen bestimmungsgemäßen Gebrauch der Verpackungsvorrichtung bezogen. Hierbei steht die Verpackungsvorrichtung insbesondere über den Boden auf einer Aufstellfläche auf. Die Stützteile sind dementsprechend obenseitig auf dem Boden angeordnet und stehen auf diesem auf.

Die Verpackungsvorrichtung ist insbesondere für Transportzwecke vorgesehen. Speziell für Transporte kann die Verpackungsvorrichtung einen Verpackungsbehälter umfassen oder ausbilden. Der Verpackungsbehälter kann den Boden, einen von diesem abstehenden Mantel und vorzugsweise einen den Mantel zumindest teilweise überdeckenden Deckel umfassen. Hierauf wird nachfolgend noch eingegangen.

Ein Abstand des jeweiligen Stützelementes vom Boden, insbesondere einer Bodenwand, beträgt beispielsweise ungefähr 20 cm bis 50 cm, vorzugsweise ungefähr 25 cm bis 45 cm, noch bevorzugter ungefähr 30 cm bis 40 cm.

Günstigerweise sind die Stützteile so bemessen, dass zum einen eine Abstützung des Stützkörpers über die Stützteile möglich ist und zum anderen eine Auflage des Rades auf dem Boden im Zwischenraum zwischen den Stützteilen. Auf diese Weise kann das Gewicht des Zweirades indirekt über die Stützteile sowie direkt auf den Boden übertragen werden.

Weiterhin beansprucht ist es, dass die Stützteile ein flächiges Auflageelement umfassen oder ausbilden und über dieses flächig auf dem Boden aufliegen, insbesondere auf einer Bodenwand des Bodens. Über das flächige Auflageelement kann die Kraft zuverlässig auf den Boden abgeleitet werden. Gleichzeitig kann der Druck auf den Boden aufgrund der flächigen Ausgestaltung des Auflageelementes begrenzt werden.

Von Vorteil ist es, wenn die Stützteile am Boden festgelegt oder festlegbar sind. Dadurch kann eine Bewegung der Stützteile relativ zum Boden vermieden werden und eine zuverlässigere Aufnahme des Zweirads erfolgen.

Günstig ist es, wenn das Stützteil mindestens eine Lasche oder einen Anbindeabschnitt umfasst oder ausbildet, durch die/den hindurch das Stützteil mit dem Boden verheftbar ist. Durch die Lasche oder den Anbindeabschnitt hindurch kann das Stützteil am Boden verheftet und dadurch auf einfache Weise mit dem Boden verbunden werden. Beispielsweise bildet das vorstehend erwähnte Auflageelement die Lasche oder den Anbindeabschnitt aus.

Alternativ oder ergänzend zur Verheftung kann beispielsweise eine Verbindung durch Verkleben und/oder durch Formschluss mit dem Boden vorgesehen sein.

Vorzugsweise sind die Stützteile getrennt vom Boden gebildet und frei auf dem Boden positioniert oder positionierbar. Dadurch weist die Verpackungsvorrichtung eine hohe Vielseitigkeit auf. Die Positionierbarkeit der Stützteile erlaubt es beispielsweise, die Verpackungsvorrichtung an Zweiräder unterschiedlicher Abmessungen anzupassen, insbesondere sogar direkt beim Verpacken. Je nach Abmessung des Zweirades können die Stützteile vorzugsweise an einer geeigneten Position am Boden fixiert werden.

Vorgesehen sein kann bei einer bevorzugten Ausführungsform der Verpackungsvorrichtung insbesondere, dass mehrere Paare von funktionsgleichen, aber hinsichtlich ihrer Größe unterschiedlichen Stützteilen vorgesehen sind. Beispielsweise unterscheiden sich die Stützteile lediglich in ihrer Höhe und damit dem Abstand des jeweiligen Stützelementes vom Boden. Je nach zu verpackendem Zweirad kann das Paar von Stützteilen mit den geeigneten Abmessungen ausgewählt und beispielsweise auf dem Boden fixiert werden.

Günstig ist es, wenn die Stützelemente eine Ausnehmung zum Aufnehmen des Stützkörpers umfassen, der in einer Stützposition des Zweirads mit der Ausnehmung in Eingriff steht. Über den Eingriff zwischen dem Stützkörper und der Ausnehmung kann eine definierte Relativposition des Zweirads zum Stützteil sichergestellt werden. Dies ermöglicht eine zuverlässige Fixierung des Zweirads. Vorgesehen sein kann beispielsweise, dass das Zweirad auf den Boden aufgeschoben wird, bis der Stützkörper in Eingriff mit den Ausnehmungen gelangt und dadurch das Zweirad die gewünschte definierte Position an der Verpackungsvorrichtung einnimmt.

Unter "Einschieben" und/oder "Aufschieben" wird vorliegend insbesondere "Rollen" verstanden, wobei das Zweirad mit drehenden Rädern auf dem Boden gerollt wird. "Einschieben in die Verpackungsvorrichtung" kann insbesondere "Aufschieben auf den Boden" bedeuten.

Die Stützelemente sind beispielsweise parallel zum Boden angeordnet und ausgerichtet.

Vorgesehen sein kann, dass der Stützkörper an der Ausnehmung in das Material des Stützteils einsinken kann, wenn er mit dieser in Eingriff gelangt. Beispielsweise kann vorgesehen sein, dass das Stützteil zumindest im Bereich der Ausnehmung verformbar ist, um den Eingriff zwischen dem Stützkörper und der Ausnehmung zu verbessern.

Die Ausnehmung ist beispielsweise eine in der Querrichtung erstreckte Mulde. Vorgesehen sein kann, dass eine Tiefe der Ausnehmung in Höhenrichtung kleiner ist als ein Durchmesser eines als Stange oder Rohr ausgestalteten Stützkörpers. Auf diese Weise taucht der Stützkörper nicht vollständig in die Ausnehmung ein, sondern kann in der Höhenrichtung insbesondere über einen oberen Rand der Ausnehmung hervorstehen. Dies erleichtert es beispielsweise, das Zweirad nach dem Transport wieder aus der Verpackungsvorrichtung zu entnehmen, indem der Eingriff zwischen dem Stützkörper und der Ausnehmung aufgehoben wird.

Die Stützteile umfassen erfindungsgemäß ein in der Höhenrichtung ansteigendes Rampenelement, an dem der Stützkörper anliegen und in der Längsrichtung in Richtung des Stützelementes geführt werden kann. Der Stützkörper kann am Rampenelement anliegen und insbesondere aufliegen und beim Einschieben des Zweirades in die Verpackungsvorrichtung in einen größeren Abstand zum Boden geführt werden, bis ein Sollabstand zum Boden erzielt ist. Der Sollabstand wird insbesondere durch das Stützelement definiert, an dem günstigerweise die vorstehend erwähnte Ausnehmung vorgesehen ist. Das Vorsehen des Rampenelementes erleichtert es dem Benutzer, den Stützkörper in die Solllage am Stützelement zu überführen und dadurch die definierte Position des Zweirades an den Stützteilen sicherzustellen. Vorzugsweise kann das Zweirad in einer Einschubrichtung, die in der Längsrichtung orientiert ist, in die Verpackungsvorrichtung eingeschoben werden. Während des Einschiebens kann der Stützkörper das Rampenelement kontaktieren. Bei weiterem Einschieben wird der Stützkörper am Rampenelement entlanggeführt.

Ein dem Stützelement abgewandter Anfangsabschnitt des Rampenelementes, bezogen auf die Einschubrichtung, ist vorzugsweise im Abstand zum Boden angeordnet. Insbesondere erstreckt sich das Rampenelement nicht bis zum Boden.

Das Rampenelement definiert vorzugsweise eine Schräge zum Führen des Stützkörpers. Günstigerweise ist das Rampenelement geradlinig erstreckt. Ein Winkel zwischen einer vom Boden definierten Ebene und der Verlaufsrichtung des Rampenelementes beträgt beispielsweise ungefähr 20° bis 70°, vorzugsweise ungefähr 30° bis 60°.

Die Stützteile umfassen günstigerweise ein in der Längsrichtung wirksames Anschlagelement für den Stützkörper. Beim Einschieben des Zweirades kann der Stützkörper am Anschlagelement anschlagen. Das Zweirad ist dadurch beim Einschieben und/oder beim Transport gegen Bewegungen in der Längsrichtung gesichert. Günstigerweise ist das Anschlagelement an der vorstehend erwähnten Ausnehmung angeordnet. Das Anschlagelement kann vorzugsweise an der dem vorstehend erwähnten Rampenelement abgewandten Seite des Stützelementes angeordnet sein.

Weiterhin beansprucht ist es, dass die Stützteile eine Mehrzahl von in der Querrichtung seitlich nebeneinander positionierten, einander überlappenden flächigen Materiallagen umfassen. Es zeigt sich, dass durch Vorsehen einer Mehrzahl von Materiallagen eine zugleich konstruktiv einfache Herstellung und zuverlässige Funktion der Stützteile sichergestellt werden kann. Hierbei liegen zwei oder mehr benachbarte Materiallagen aneinander flächig an. Die Stützteile sind beispielsweise in der Höhenrichtung und in der Längsrichtung erstreckt und liegen in der Querrichtung, zumindest teilweise, flächig aneinander an (zum Beispiel entsprechend einem gedrehten Stapel von Materiallagen). Günstigerweise sind zwei oder mehr Materiallagen miteinander verbunden.

Eine jeweilige Materiallage kann bei einer bevorzugten Ausführungsform in sich mehrlagig sein, beispielsweise bei Fertigung der Stützteile aus einem Papiermaterial wie insbesondere Wellpappe.

Günstig ist es, wenn die Stützteile aus einem Papiermaterial gefertigt sind, insbesondere aus Wellpappe. Durch Verwendung des Papier- und insbesondere Wellpappematerials kann das Gewicht der Verpackungsvorrichtung gering gehalten werden. Neben den Herstellungskosten erlaubt dies auch geringe Transportkosten aufgrund der Gewichtsreduktion der Verpackungsvorrichtung.

Günstigerweise sind die Stützteile ausgehend von einem flachen Zuschnitt des Papiermaterials in eine Gebrauchsstellung aufrichtbar.

Wie bereits erwähnt, kann eine jeweilige Materiallage selbst mehrlagig sein. Beispielsweise kommt für eine jeweilige Materiallage bei Verwendung von Wellpappe mindestens zweilagige Wellpappe zum Einsatz, vorzugsweise dreilagige Wellpappe.

Wellenkämme der Materiallagen des Wellpappematerials verlaufen vorzugsweise in der Höhenrichtung. Die "Ausbreitungsrichtung" der Welle des Wellpappematerials verläuft vorzugsweise in der Längsrichtung.

Eine Steifigkeit der Materiallagen ist günstigerweise in der Höhenrichtung größer als in der Längsrichtung und/oder in der Querrichtung.

Die Stützteile sind vorzugsweise eigenstabil und selbststehend.

Günstig ist es, wenn die Stützteile mindestens ein beispielsweise in der Höhenrichtung und in der Querrichtung erstrecktes Aussteifelement umfassen, über das zwei im Abstand zueinander angeordnete oder im Winkel zueinander ausgerichtete Materiallagen miteinander verbunden sind. Auf diese Weise kann konstruktiv einfach, insbesondere aus einem Papiermaterial, ein eigenstabiles und selbststehendes Stützteil gebildet werden. Es können zum Beispiel zwei Materiallagen vorgesehen sein, die im Winkel zueinander ausgerichtet sind und einander nicht schneiden, die über das mindestens eine Aussteifelement verbunden sind. Alternativ können zum Beispiel parallel zueinander ausgerichtete Materiallagen über das mindestens eine Aussteifelement verbunden sein.

Beispielsweise ist das Aussteifelement über Laschen zum Erzielen eines Formschlusses mit einer der Materiallagen verbunden. Das Aussteifelement kann alternativ oder ergänzend beispielsweise an mindestens einer der Materiallagen faltbar gehalten sein.

Die Stützteile sind günstigerweise als Gleichteile ausgestaltet. Dies erlaubt eine kostengünstige Herstellung und einfache Handhabung der Verpackungsvorrichtung.

Die Verpackungsvorrichtung umfasst vorzugsweise zwei in der Querrichtung im Abstand zueinander angeordnete auf dem Boden aufliegende Zentrierteile, zwischen denen eine rinnenförmige Ausnehmung zur Aufnahme eines Rades des Zweirads angeordnet ist, insbesondere des Vorderrades. Beim Einschieben des Zweirades kann das montierte Vorderrad in die rinnenförmige Ausnehmung geführt werden. Bei weiterer Bewegung kann das Vorderrad in der Ausnehmung vorzugsweise zwischen den Zentrierteilen geführt werden. Auf diese Weise wird dem Benutzer die Handhabung der Verpackungsvorrichtung erleichtert.

Die Zentrierteile sind vorzugsweise aus einem Papiermaterial gefertigt, insbesondere aus Wellpappe.

Günstigerweise ist ein jeweiliges Zentrierteil ausgehend von einem flachen Zuschnitt des Papiermaterials in eine Gebrauchsstellung aufrichtbar.

Beispielsweise sind die Zentrierteile in der Längsrichtung betrachtet keilförmig ausgestaltet (zum Beispiel im Wesentlichen dreieckförmig), wobei ein oberer Abschnitt von der rinnenförmigen Ausnehmung in der Querrichtung zum Rand des Bodens abfällt. Alternativ kann beispielsweise ein rechteckiger Querschnitt vorgesehen sein, in der Längsrichtung betrachtet.

Von Vorteil ist es, wenn die Verpackungsvorrichtung mindestens ein Blockierteil zum Anlegen an ein Rad des Zweirades und zum Sichern einer Bewegung des Zweirades gegen eine Bewegung in der Längsrichtung umfasst. Durch das mindestens eine Blockierteil kann eine definierte Sollposition des Zweirades in der Verpackungsvorrichtung sichergestellt werden.

Günstigerweise sind zwei Blockierteile vorgesehen, die an das Vorderrad und an das Hinterrad des Zweirads angelegt oder anlegbar sind. Dies erlaubt es, das Zweirad an beiden Rädern gegen eine Bewegung in der Längsrichtung zu sichern.

Das mindestens eine Blockierteil ist bevorzugt mittels eines Mantels oder Mantelteils der Verpackungsvorrichtung in einer Solllage auf dem Boden fixierbar. Beispielsweise steht der Mantel oder das Mantelteil auf einem Halteglied und/oder auf einem Rand des Blockierteils auf.

Das mindestens eine Blockierteil ist vorzugsweise aus einem Papiermaterial gefertigt, insbesondere aus Wellpappe.

Günstigerweise ist das Blockierteil ausgehend von einem flachen Zuschnitt des Papiermaterials in eine Gebrauchsstellung aufrichtbar.

Das mindestens eine Blockierteil ist günstigerweise in der Querrichtung zwischen Seitenwänden der Verpackungsvorrichtung erstreckt ausgestaltet. Das mindestens eine Blockierteil kann zum Beispiel formschlüssig zwischen den Seitenwänden angeordnet sein. Alternativ oder ergänzend kann das mindestens eine Blockierteil zum Beispiel formschlüssig zwischen Abschnitten eines Randes des Bodens angeordnet sein, der von einer Bodenwand absteht.

In der Querrichtung betrachtet ist das mindestens eine Blockierteil vorzugsweise keilförmig ausgestaltet. Das mindestens eine Blockierteil kann insbesondere einen Unterlegkeil ausbilden, der das Rad an einer Lauffläche untergreift und dadurch das Rad gegen eine Bewegung in der Längsrichtung sichert.

Vorzugsweise sind zwei Blockierteile vorgesehen, die vorzugsweise an einander gegenüberliegenden Endabschnitten der Verpackungsvorrichtung angeordnet sind. Beispielsweise sind die Blockierteile jeweils angrenzend oder anliegend an einander gegenüberliegenden Seitenwänden der Verpackungsvorrichtung angeordnet, wobei die Blockierteile die Räder in einander entgegengesetzte Orientierungen der Längsrichtung blockieren. Die Seitenwände sind beispielsweise Querseitenwände der Verpackungsvorrichtung.

Beispielsweise blockiert ein Blockierelement das Vorderrad gegen Bewegung in der Einschubrichtung, oder umgekehrt. Das andere Blockierelement kann das Hinterrad gegen Bewegung entgegen der Einschubrichtung blockieren, oder umgekehrt.

Die zwei Blockierteile sind vorzugsweise als Gleichteile ausgestaltet.

Die Verpackungsvorrichtung kann beispielsweise derart auf einer Aufstellfläche positioniert sein, dass eine Bodenwand des Bodens auf der Aufstellfläche aufliegt. Bei einer andersartigen Ausführungsform der Erfindung kann vorgesehen sein, dass die Verpackungsvorrichtung eine Palette umfasst, auf der die Bodenwand angeordnet ist.

Insbesondere bei der zuletzt erwähnten Ausführungsform kann es günstig sein, wenn die Verpackungsvorrichtung ein Rampenteil umfasst, das vorzugsweise in der Längsrichtung seitlich an den Boden anlegbar und in der Querrichtung erstreckt ausgebildet ist und ein Rampenelement umfasst, über das hinweg das Zweirad von einer Aufstellfläche für die Verpackungsvorrichtung auf den Boden aufschiebbar ist. Über das Rampenteil kann das Zweirad, insbesondere ein Motorrad mit erheblichem Gewicht, handhabungsfreundlich auf den Boden gerollt werden. Zu diesem Zweck wird das Zweirad über das Rampenelement geführt.

Das Rampenelement ist vorzugsweise aus einem Papiermaterial gefertigt, insbesondere aus Wellpappe.

Günstigerweise ist das Rampenelement ausgehend von einem flachen Zuschnitt des Papiermaterials in eine Gebrauchsstellung aufrichtbar.

Das Rampenteil kann insbesondere in der Querrichtung betrachtet keilförmig ausgestaltet sein.

Bezogen auf die Querrichtung kann das Rampenteil vorzugsweise in einem mittleren Bereich unterhalb des Rampenelementes eine in Richtung auf die Aufstellfläche wirksame Aussteifung umfassen. Über die Aussteifung wird eine robustere Ausgestaltung des Rampenteils insbesondere in demjenigen Bereich ermöglicht, über den das Zweirad hinweg auf den Boden gerollt wird. Die Gewichtskraft kann über das Rampenelement und die Aussteifung auf den Boden abgeleitet werden.

Günstig ist es, wenn das Rampenteil ein Blockierteil ausbildet, das zum Aufschieben des Zweirades auf den Boden als Rampenteil einsetzbar und nach dem Aufschieben auf dem Boden ablegbar und als Blockierteil einsetzbar ist. Ein gesondertes Rampenteil oder gesondertes Blockierteil kann auf diese Weise eingespart werden. Beispielsweise wird das Rampenteil als Blockierteil zum Blockieren des Hinterrades verwendet.

Wie bereits erwähnt kann der Boden eine Bodenwand umfassen.

Wie ebenfalls bereits erwähnt kann der Boden mindestens eine Palette umfassen, oberhalb derer in der Höhenrichtung eine Bodenwand des Bodens angeordnet ist.

Die Verpackungsvorrichtung umfasst vorteilhafterweise einen vom Boden abstehenden Mantel, wobei der Mantel in der Längsrichtung verlaufend mindestens eine Längsseitenwand umfasst und/oder in der Querrichtung verlaufend mindestens eine Querseitenwand, wobei der Mantel einen Aufnahmeraum der Verpackungsvorrichtung zumindest teilweise einfasst. Das auf dem Boden positionierte Zweirad kann durch den Mantel seitlich geschützt werden. Vorzugsweise umgibt der Mantel den Aufnahmeraum vollständig.

Der Boden kann einen von einer Bodenwand abstehenden Rand aufweisen, der den Mantel außenseitig überdeckt. Auf diese Weise kann der Mantel handhabungsfreundlich einfach angeordnet werden.

Der Mantel kann bei einer bevorzugten Ausführungsform zwei Mantelteile umfassen, die jeweils drei Seitenwände umfassen. Beispielsweise umfasst der Mantel einander gegenüberliegend jeweils überlappende Seitenwände des ersten Mantelteils und des zweiten Mantelteils. Beispielsweise sind die überlappenden Seitenwände Querseitenwände entlang der Querrichtung. Dementsprechend kann der Mantel beispielsweise zweimal zwei Querseitenwände und zwei Längsseitenwände umfassen.

Dadurch ist zum Beispiel die Möglichkeit gegeben, zunächst das Zweirad auf den Boden zu schieben und über die Stützteile zu fixieren. Anschließend kann das erste Mantelteil angeordnet werden, so dass der Aufnahmeraum von drei Seiten geschlossen ist und an einer Seite weiterhin geöffnet ist. Zweiradteile und/oder -zubehör können im Aufnahmeraum angeordnet werden. Anschließend kann der Aufnahmeraum über das zweite Mantelteil verschlossen werden.

Die Verpackungsvorrichtung umfasst vorteilhafterweise einen den Mantel überdeckenden Deckel, der den Aufnahmeraum mit einer Deckenwand zumindest abschnittsweise überdeckt und verschließt. Beispielsweise ist der Deckel ein Stülpdeckel, der einen in Richtung des Bodens abstehenden Rand umfasst, welcher den Mantel außenseitig überdeckt.

Die Bodenwand, der Mantel und/oder der Deckel sind vorteilhafterweise aus einem Papiermaterial gefertigt, insbesondere aus Wellpappe.

Beispielsweise sind diese Komponenten der Verpackungsvorrichtung ausgehend von einem flachen Zuschnitt des Papiermaterials in eine Gebrauchsstellung aufrichtbar.

Die Bodenwand mit Rand einerseits und der Deckel andererseits können als Gleichteile ausgestaltet sein.

Von Vorteil ist es, wenn das Zweirad im Aufnahmeraum zwischen Seitenwänden des Mantels fixiert werden kann.

Dementsprechend ist es von Vorteil, wenn die Verpackungsvorrichtung ein Fixierteil umfasst, das zwei in der Querrichtung voneinander beabstandete Stützabschnitte umfasst, die über einen Verbindungsabschnitt in der Querrichtung miteinander verbunden sind, wobei zwischen den Stützabschnitten eine Aussparung gebildet ist, die in der Höhenrichtung vom Verbindungsabschnitt begrenzt und in Richtung des Bodens geöffnet ist. Das Fixierteil kann vorzugsweise über das Zweirad gestülpt werden, wobei zum Beispiel ein Sitz oder ein Rahmenteil des Zweirads in die Ausnehmung eingreifen kann. Ist das Zweirad ein Motorrad, wird das Stützteil vorteilhafterweise über den Motorradsitz gestülpt, wobei die Stützabschnitte auf einander gegenüberliegenden Seiten des Motorradsitzes angeordnet sind. Die Stützabschnitte können sich günstigerweise am Mantel abstützen und dadurch eine Fixierung des Zweirads in deren Querrichtung sicherstellen.

Vorteilhaft kann es sein, wenn die Aussparung sich in Richtung auf den Boden erweiternd ausgestaltet ist. Hierunter kann vorliegend insbesondere verstanden werden, dass sich die Aussparung in der Höhenrichtung nach oben verjüngt. Über eine derartige Ausgestaltung der Aussparung kann beispielsweise eine Größenanpassung an das Zweirad erfolgen, so dass für unterschiedliche Modelle dasselbe Fixierteil eingesetzt werden kann.

Die Aussparung kann in der Längsrichtung betrachtet beispielsweise trapezförmig ausgestaltet sein.

Der Verbindungsabschnitt ist vorteilhafterweise parallel zum Boden ausgerichtet.

Die Stützabschnitte umfassen vorzugsweise Anlageelemente, die flächig an einander gegenüberliegenden Seitenwänden des Mantels anliegen. Ein erster Stützabschnitt liegt beispielsweise flächig an einer ersten Längsseitenwand des Mantels an. Der zweite Stützabschnitt liegt vorzugsweise flächig an der gegenüberliegenden zweiten Längsseitenwand des Mantels an.

Mindestens ein Stützabschnitt, vorzugsweise beide Stützabschnitte, umfassen vorteilhafterweise zwei in der Längsrichtung voneinander beabstandete Seitenwände und eine Bodenwand, die gemeinsam einen Aufnahmeraum des Stützabschnittes begrenzen. Dies erlaubt es beispielsweise, Zweiradteile und/oder -zubehör im Aufnahmeraum zu platzieren und dadurch mittels des Fixierteils zu haltern.

Die Verpackungsvorrichtung umfasst vorzugsweise längserstreckte und in Höhenrichtung ausgerichtete Versteifungselemente, die auf dem Boden aufstehen und am Mantel festgelegt sind und sich vorzugsweise bis zu einem freien Rand des Mantels erstrecken, der dem Boden abgewandt ist. Die Versteifungselemente sind zum Beispiel Holzleisten, die mittels Verbindungselementen am Mantel fixiert sein können. Die Versteifungselemente verstärken den von Boden und Mantel und vorzugsweise Deckel verschlossenen Verpackungsbehälter. Vorzugsweise besteht die Möglichkeit, Verpackungsbehälter auch im befüllten Zustand übereinander zu stapeln.

Wie bereits erwähnt betrifft die vorliegende Erfindung ein Verpackungssystem.

Ein erfindungsgemäßes Verpackungssystem für ein Zweirad, insbesondere für ein Motorrad, umfasst eine Verpackungsvorrichtung der vorstehend genannten Art und einen Stützkörper, der in vorgegebener oder vorgebbarer Position an einer Radnabe oder Achse des Rads angeordnet und gehalten ist und weiterhin die restlichen Merkmale des Anspruchs 1 enthält.

Die Vorteile, die bereits im Zusammenhang mit der Erläuterung der Verpackungsvorrichtung erwähnt wurden, können mittels dem erfindungsgemäßen Verpackungssystems erzielt werden. Diesbezüglich kann auf die voranstehenden Ausführungen verwiesen werden.

Vorteilhafte Ausführungsformen des Verpackungssystems ergeben sich durch vorteilhafte Ausführungsformen der Verpackungsvorrichtung.

Der Stützkörper kann insbesondere ein(e) durch eine Hohlachse des Zweirads hindurchgeführte Stange oder Rohr sein. Der Stützkörper ragt dabei über die Hohlachse so weit hinaus, dass er auf den Stützelementen der Stützteile aufliegen kann.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische schematische Darstellung eines erfindungsgemäßen Verpackungssystems, umfassend eine Verpackungsvorrichtung;
- Figur 2:: das Verpackungssystem aus Figur 1 mit einem verpackten Zweirad in Gestalt eines Motorrads;
- Figur 3:: eine Teildarstellung der Verpackungsvorrichtung beim Aufschieben des Motorrades auf einen Boden;
- Figur 4:: eine vergrößerte perspektivische Darstellung von Detail A gemäß Figur 2;
- Figuren 5 und 6:: perspektivische Darstellungen eines Stützteils der Verpackungsvorrichtung;
- Figur 7:: einen Materialzuschnitt für das Stützteil gemäß den Figuren 5 und 6;
- Figuren 8 und 9:: perspektivische Darstellungen eines Rampenteils der Verpackungsvorrichtung;
- Figur 10:: einen Materialzuschnitt für das Rampenteil gemäß den Figuren 8 und 9;
- Figuren 11 und 12:: perspektivische Darstellungen eines Fixierteils der Verpackungsvorrichtung;
- Figur 13:: einen Materialzuschnitt des Fixierteils gemäß den Figuren 11 und 12; und
- Figur 14:: eine perspektivische Darstellung eines Zentrierteils der Verpackungsvorrichtung.

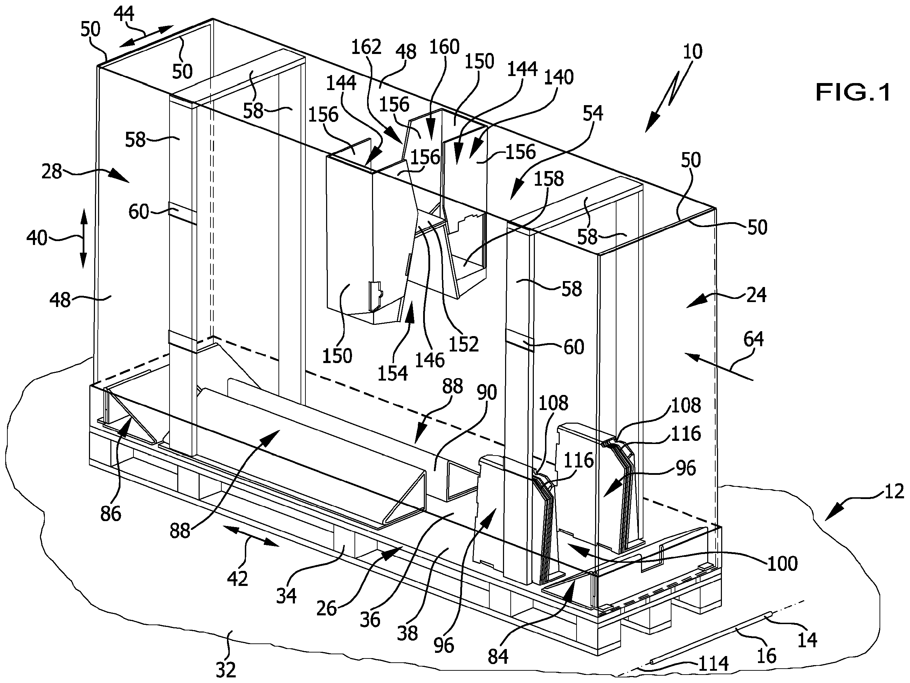

Figur 1 zeigt in schematischer perspektivischer Darstellung eine mit dem Bezugszeichen 10 belegte bevorzugte Ausführungsform einer Verpackungsvorrichtung des erfindungsgemäßen Verpackungssystems, nachfolgend vereinfacht als Vorrichtung 10 bezeichnet.

Die Vorrichtung 10 ist Bestandteil eines mit dem Bezugszeichen 12 belegten Verpackungssystems in bevorzugter Ausführungsform. Das Verpackungssystem 12 umfasst die Vorrichtung 10 und einen Stützkörper 14. Der Stützkörper 14 ist vorliegend als Rohr oder Stange 16 ausgestaltet.

Das Verpackungssystem 12 dient zum Verpacken eines Zweirads, bei dem es sich vorliegend insbesondere um ein Motorrad 18 handelt. Insbesondere wird das Motorrad 18 zu Transportzwecken verpackt, beispielsweise für den Transport vom Hersteller zum Händler.

Das Motorrad 18 wird im vorliegenden Ausführungsbeispiel teilzerlegt verpackt, wobei allerdings das Hinterrad 20 und das Vorderrad 22 montiert bleiben. Komponenten wie beispielsweise ein Lenker des Motorrads 18 können demgegenüber vorzugsweise demontiert sein. Über das Motorrad 18 hinaus können mittels der Verpackungsvorrichtung beispielsweise Zubehörteile verpackt und transportiert werden.

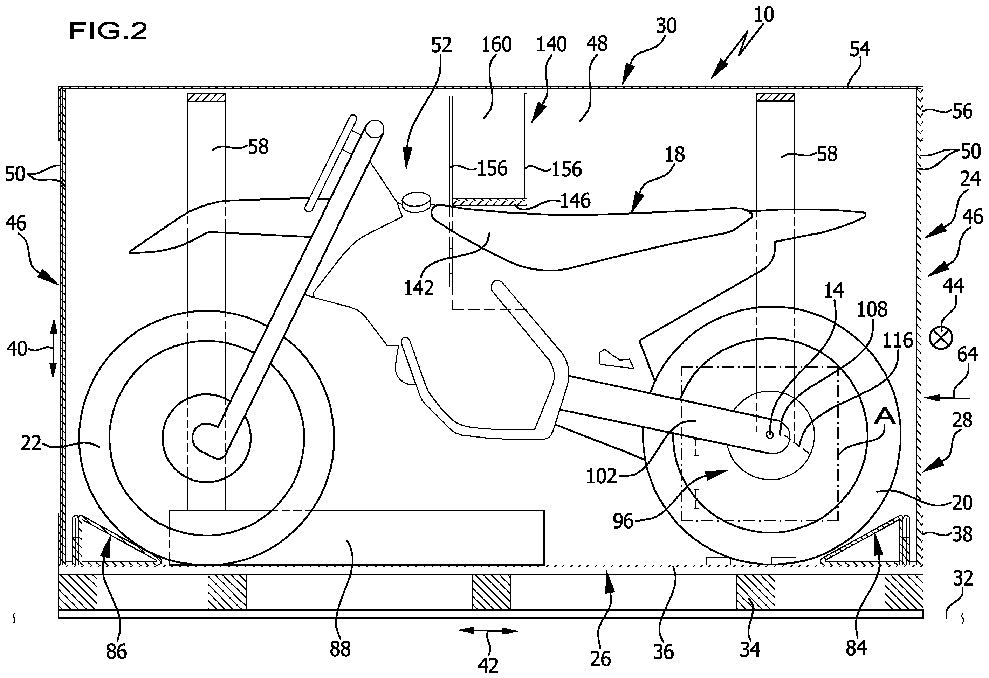

Wie zunächst insbesondere in Bezug auf die Figuren 1 und 2 erläutert wird, umfasst die Vorrichtung 10 einen Verpackungsbehälter 24. Der Verpackungsbehälter 24 weist einen Boden 26 auf, einen Mantel 28 und einen Deckel 30. Der Deckel 30 ist nur in Figur 2 dargestellt.

Über den Boden 26 kann die Vorrichtung 10 im bestimmungsgemäßen Gebrauch auf einer Aufstellfläche 32 aufstehen, wobei eine vom Boden 26 definierte Kontaktebene mit der Ebene der Aufstellfläche 32 zusammenfällt.

Der Boden 26 umfasst im vorliegenden Ausführungsbeispiel eine Palette 34, beispielsweise aus Holz, sowie eine Bodenwand 36, die oberhalb der Palette 34 angeordnet ist. Vorzugsweise ist die Bodenwand 36 mit der Palette 34 verbunden, zum Beispiel durch Verheftung.

Der Boden 26 umfasst ferner einen Rand 38, der von der Bodenwand 36 in einer Höhenrichtung 40 absteht und entlang des Außenumfangs der Bodenwand 36 verläuft. Der Boden 26 bildet dadurch einen Stülpboden aus.

Die Vorrichtung 10, insbesondere der Verpackungsbehälter 24, weist insbesondere eine Längsrichtung 42 auf. Quer und insbesondere senkrecht zur Längsrichtung 42 ist eine Querrichtung 44 ausgerichtet. Die Höhenrichtung 40 ist quer und insbesondere senkrecht zur Längsrichtung 42 und zur Querrichtung 44 ausgerichtet. Die Abmessung der Vorrichtung 10 in der Längsrichtung 42 übersteigt die Abmessung der Querrichtung 44. Das Motorrad 18 wird vorzugsweise so verpackt und im Verpackungsbehälter 24 angeordnet, dass die Längsrichtung 42 mit der Längsrichtung des Motorrads 18 zusammenfällt.

Im vorliegenden Fall ist es günstig, dass der Verpackungsbehälter 24 vorgesehen ist. Zur Ausbildung des Verpackungsbehälters 24 ist der Mantel 28 vorhanden. Beispielsweise wird der Mantel 28 aus zwei Mantelteilen 46 gebildet. Die Mantelteile 46 sind vorzugsweise identisch ausgestaltet.

Insbesondere kann vorgesehen sein, dass jedes Mantelteil 46 eine Längsseitenwand 48 umfasst und zwei einander gegenüberliegende Querseitenwände 50. Dementsprechend können in der Längsrichtung 42 zwei zueinander beabstandete Längsseitenwände 48 vorgesehen sein. An jeder Querseite umfasst der Mantel 28 zwei Querseitenwände 50 (Figuren 1 und 2).

Beim Verpacken des Motorrades 18 bietet dies den Vorteil, dass dieses zunächst wie nachfolgend erläutert auf den Boden 26 geschoben und darauf fixiert werden kann. Anschließend kann das erste Mantelteil 46 auf den Boden 26 und/oder die nachfolgend erwähnten Blockierteile aufgestellt werden und das Motorrad 18 von drei Seiten umgeben. Zubehör und/oder Motorradteile können in den vom Mantel 28 eingefassten und vom Boden 26 unten begrenzten Aufnahmeraum 52 eingebracht werden.

Im Anschluss daran kann der Aufnahmeraum 52 seitlich durch Anordnen des zweiten Mantelteils 46 verschlossen werden, wobei die jeweiligen Querseitenwände 50 einander überdecken und vorzugsweise aneinander zur Anlage gelangen. Die Querseitenwände 50 können miteinander verbunden sein, zum Beispiel durch Verheften.

Der vorzugsweise vorhandene Deckel 30 umfasst eine Deckenwand 54 und kann auf den Mantel 28 aufgesetzt werden, um den Aufnahmeraum 52 obenseitig zu verschließen. Von der Deckenwand 54 steht vorliegend ein Rand 56 in Richtung des Bodens 26 ab. Der Deckel 30 ist somit insbesondere ein Stülpdeckel, der über den Mantel 28 gestülpt werden kann. Der Rand 56 verläuft entlang des gesamten Außenumfangs der Deckenwand 54.

Der Mantel 28, der Deckel 30 und die Bodenwand 36 samt Rand 38 sind vorzugsweise aus einem Papiermaterial gefertigt, insbesondere aus Wellpappe. Bevorzugt sind diese Komponenten ausgehend von einem einteiligen flachen Zuschnitt (nicht gezeigt) in eine Gebrauchsstellung überführbar.

Zur Fixierung des Verpackungsbehälters 24 im geschlossenen Zustand können Umreifungen vorgesehen sein (nicht gezeigt), vorzugsweise um den Boden 26 und um den Deckel 30 herum und/oder horizontal um den Mantel 28 herum.

Der Verpackungsbehälter 24 ist ferner vorzugsweise dadurch verstärkt, dass Versteifungselemente 58 vorgesehen sind. Die Versteifungselemente 58, beispielsweise Holzleisten, stehen auf der Bodenwand 36 auf und sind am Mantel 28 mittels Verbindungselementen 60 fixiert. Die Versteifungselemente 58 erstrecken sich im Wesentlichen bis zum freien Rand des Mantels 28, der dem Boden 26 abgewandt ist. Obenseitig können einander in Querrichtung 44 gegenüberliegende Versteifungselemente 58 über ein weiteres, insbesondere parallel zur Bodenwand 36 verlaufendes Versteifungselement 58 miteinander verbunden sein.

Das Vorsehen der Versteifungselemente 58 erlaubt es vorzugsweise, Vorrichtungen 10 auch im befüllten Zustand übereinander zu stapeln.

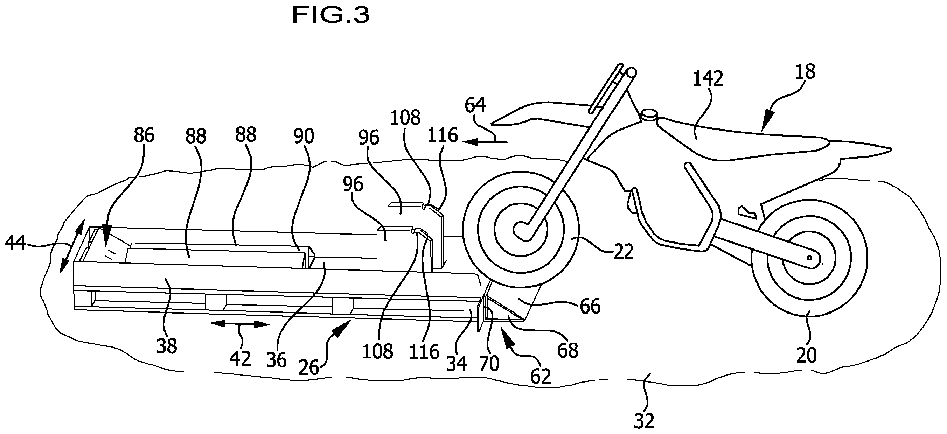

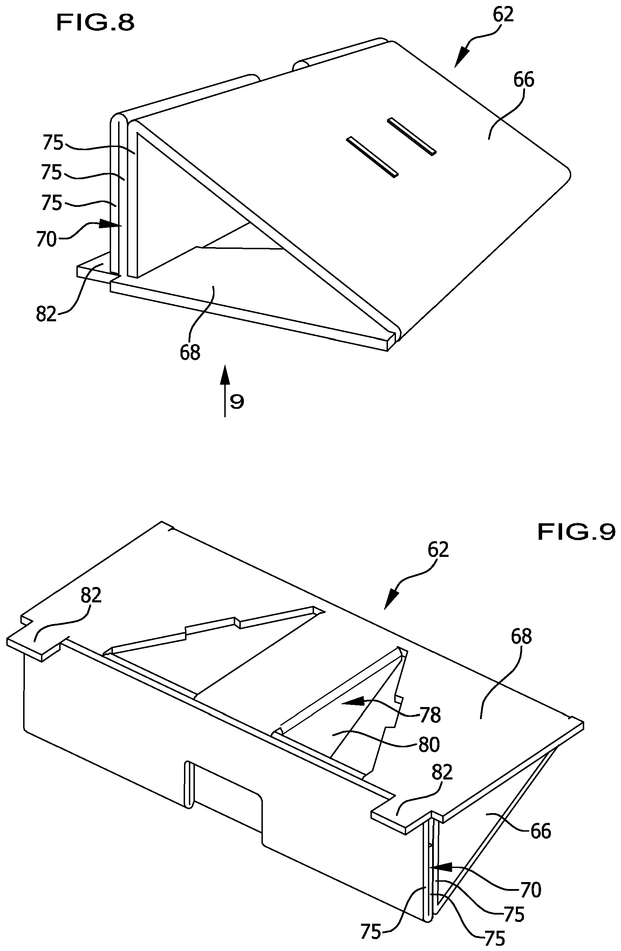

Nachfolgend wird unter Verweis insbesondere auf die Figuren 3 bis 10 auf das Aufschieben des Motorrads 18 auf den Boden 26 eingegangen sowie das Abstützen des Motorrads 18 auf dem Boden 26. Hierbei ist vorgesehen, dass der Mantel 28 noch nicht auf dem Boden 26 und der Deckel 26 noch nicht auf dem Mantel 28 angeordnet sind. Das Aufschieben des Motorrads 18 auf den Boden 26 kann insbesondere als "Einschieben" in die noch geöffnete Vorrichtung 10 angesehen werden. Das Aufschieben erfolgt insbesondere, indem das Motorrad mit montierten Rädern 20, 22 auf den Boden 26 gerollt wird.

Da im vorliegenden Ausführungsbeispiel der Boden 26 die Palette 34 umfasst, ist die Bodenwand 36 oberhalb der Aufstellfläche 32 und im Abstand zu dieser angeordnet. Um einem Benutzer die Handhabung der Vorrichtung 10 zu erleichtern, umfasst die Vorrichtung 10 ein Rampenteil 62 (Figuren 3 sowie 8 bis 10).

Das Rampenteil 62 kann in der Längsrichtung 42 an den Boden 26 angelegt werden, und zwar an derjenigen Seite, ausgehend von der das Motorrad 18 in einer Einschubrichtung 64 eingeschoben wird. Die Einschubrichtung 64 verläuft in der Längsrichtung 42 (Figur 3).

Das Rampenteil 62 umfasst ein von der Aufstellfläche 32 zur Bodenwand 36 aufsteigendes Rampenelement 66, um den Höhenversatz zu überwinden.

Günstigerweise ist das Rampenteil 66 in der Querrichtung 44 erstreckt ausgebildet. Dabei kann die Erstreckung des Rampenteils 62 vorzugsweise der lichten Weite des Aufnahmeraums 52 zwischen den Längsseitenwänden 48 entsprechen.

Das Rampenteil 62 ist in der Querrichtung 44 betrachtet keilförmig. Zusätzlich zum Rampenelement 66 umfasst das Rampenteil 62 vorzugsweise ein Auflageelement 68 zum Aufliegen auf der Aufstellfläche 32 sowie ein Stützelement 70, das vorzugsweise mehrlagig ausgestaltet ist.

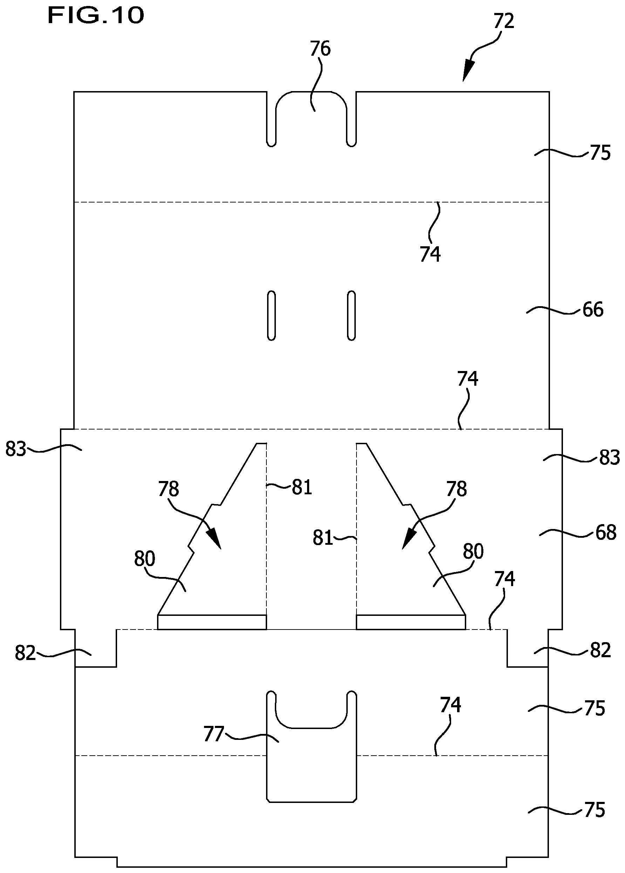

Das Rampenteil 62 ist vorzugsweise aus einem Papiermaterial gefertigt, insbesondere Wellpappe. Figur 10 zeigt einen einteiligen flachen Zuschnitt 72 für das Rampenteil 62.

Faltlinien 74, die vorliegend parallel zueinander verlaufen, verbinden das Rampenelement 66 mit dem Auflageelement 68, das Rampenelement 66 mit einem Segment 75 des Stützelementes 70, weitere Segmente 75 des Stützelementes 70 miteinander und ein Segment 75 mit dem Auflageelement 68. Über eine Lasche 76, die in eine Ausnehmung 77 eingreift, kann das Rampenteil 62 in sich gefaltet in einer Gebrauchsstellung fixiert werden.

Unterhalb des Rampenelementes 66 ist eine Aussteifung 78 angeordnet. Die Aussteifung 78 ist in der Querrichtung 48 im mittleren Bereich des Rampenteils 62 angeordnet und somit insbesondere dort, wo beim Aufschieben des Motorrades 18 die größte Kraft auf das Rampenteil 62 wirkt.

Zur Bildung der Aussteifung 78 können aus der Ebene des Zuschnitts 72 am Auflageelement 68 Stützglieder 80 um Faltlinien 81 aufgefaltet werden. Die Stützglieder 80 sind ebenfalls keilförmig und können untenseitig am Rampenelement 66 anliegen. Dadurch wird die Gewichtskraft vom Rampenelement 66 über die Stützglieder 80 auf das Auflageelement 68 abgeleitet.

Ränder 83 am Auflageelement 68 stehen in der Querrichtung 44 seitlich über das Rampenelement 66 und das Stützelement 70 hinaus.

Im Gebrauch des Rampenteils 62 liegt das Stützelement 70 seitlich am Boden 26 an. Beispielsweise sind Halteglieder 82 zum Beispiel am Auflageelement 68 in Form von Laschen 76 unterhalb der Palette 34 angeordnet, wodurch das Rampenteil 62 unbeweglich am Boden 26 fixiert ist. Über das Rampenelement 66 hinweg wird das Motorrad 18 auf die Bodenwand 36 gerollt.

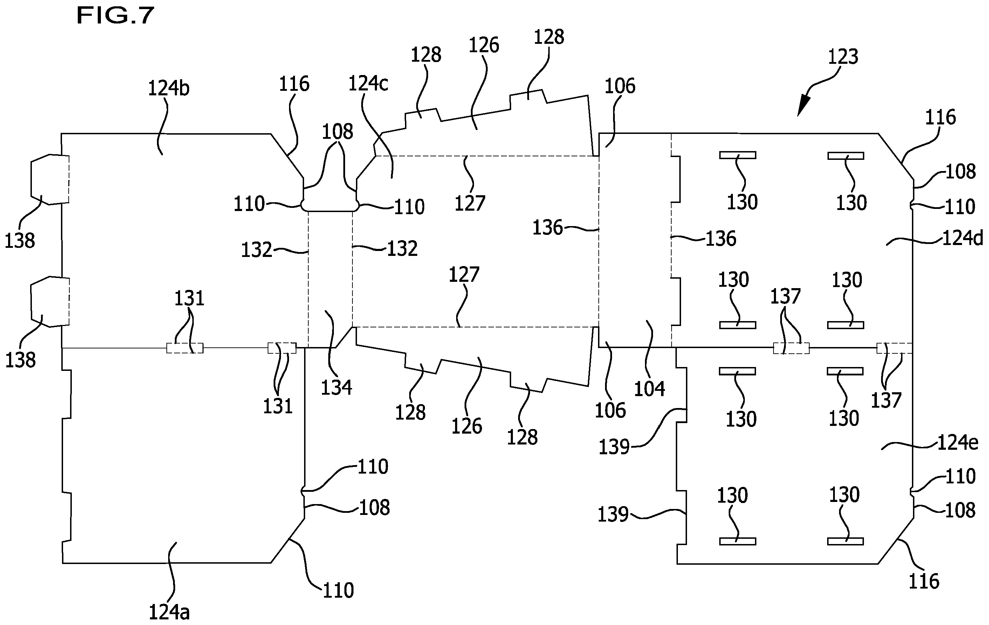

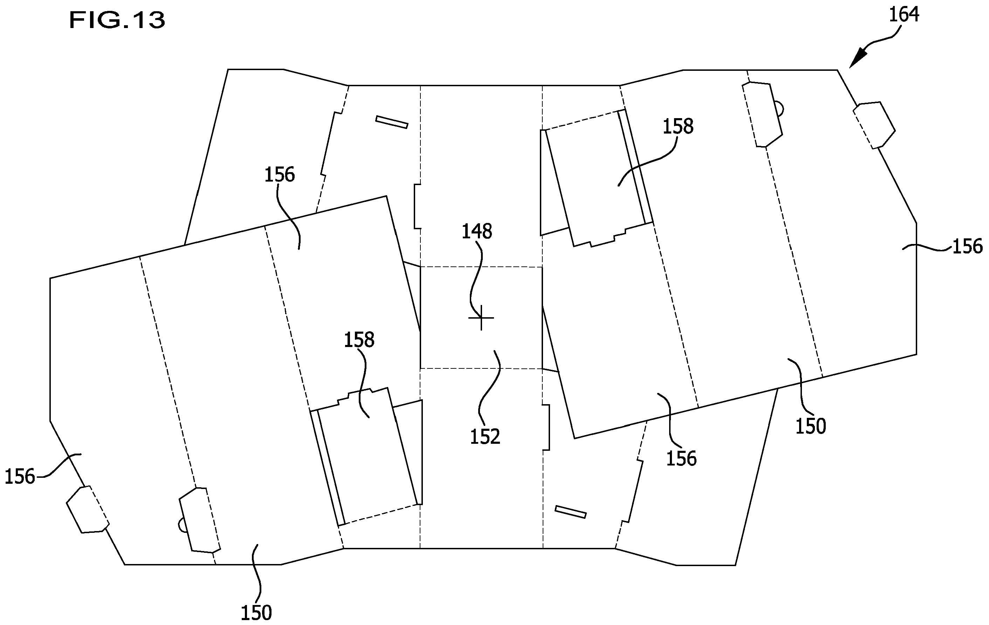

In dem Zuschnitt 72 gemäß Figur 10 sowie in den weiteren Zuschnitten gemäß den Figuren 7 und 13 sind durchgezogene Linien Trennlinien des zugrundeliegenden Materials, insbesondere Stanzlinien. Gestrichelte Linien sind Faltlinien.

Von Vorteil ist es bei der Vorrichtung 10, dass das Rampenteil 62 ein Blockierteil 84 ausbildet. Das Rampenteil 62 ist als Blockierteil 84 dann einsetzbar, wenn das Motorrad 18 in der Solllage auf dem Boden 26 aufsteht (Figuren 1 und 2). Das Blockierteil 84 kann an ein Rad, vorzugsweise das Hinterrad 20, so angelegt werden, dass das Motorrad 18 gegen Bewegung in der Längsrichtung 42 gesichert ist.

Das Blockierteil 84 grenzt an die Querseitenwände 50 und ist in der Querrichtung 44 formschlüssig zwischen den einander gegenüberliegenden Abschnitten des Randes 38 angeordnet. Dabei wirkt das Blockierteil 84 entgegen der Einschubrichtung 64 am Hinterrad 20. Das Blockierteil 84 bildet insbesondere einen Unterlegkeil für das Hinterrad 20.

Die Vorrichtung 10 umfasst ein weiteres Blockierteil 86. Das Blockierteil 86 ist günstigerweise identisch zum Blockierteil 84 ausgestaltet und dient zum Blockieren des Vorderrades 22 gegen Bewegung in der Längsrichtung 42. Dabei wird das Blockierteil 86 gegen eine Bewegung in der Einschubrichtung 64 wirksam.

Das Blockierteil 86 ist angrenzend an die der Einschubseite gegenüberliegende Seite angrenzend an die Querseitenwände 50 positioniert und in Querrichtung 44 formschlüssig zwischen den einander gegenüberliegenden Abschnitten des Randes 38 angeordnet. Das Blockierteil 86 bildet einen Unterlegkeil für das Vorderrad 22.

Bei verschlossenem Verpackungsbehälter 24 werden die Blockierteile 84, 86 mittels des Mantels 28 fixiert. Dabei stehen die Mantelteile 46 mit den Querseitenwänden 50 auf den Haltegliedern 82 auf (Figuren 1 und 2). Zusätzlich stehen die Längsseitenwände 48 auf den Rändern 83 auf.

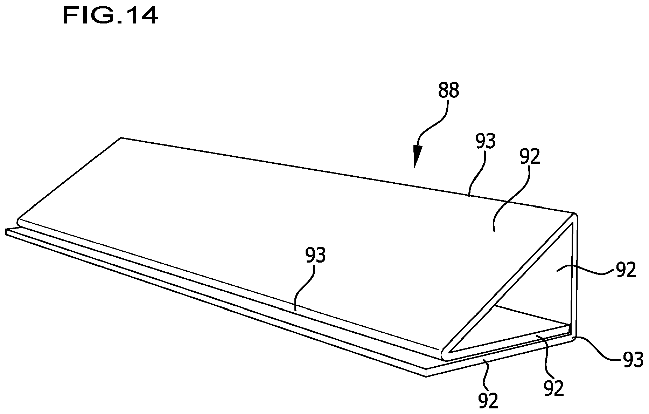

Die Vorrichtung 10 umfasst zwei vorliegend identisch ausgestaltete Zentrierteile 88. Die Zentrierteile 88 sind in der Längsrichtung 42 längserstreckt ausgebildet. In der Längsrichtung 42 betrachtet sind die Zentrierteile 88 keilförmig (Figuren 1 und 14).

Die Zentrierteile 88 sind in der Querrichtung 44 voneinander beabstandet. Zwischen den Zentrierteilen 88 ist eine rinnenförmige Ausnehmung 90 angeordnet. Ein jeweiliges Zentrierteil 88 grenzt an eine benachbarte Längsseitenwand 48.

Beim Einschieben des Motorrades 18 gelangt das Vorderrad 22 in die Ausnehmung 90. Dadurch kann das Vorderrad 22 beim Einschieben geführt werden, bis es die gewünschte Solllage erreicht.

Günstig ist es, wenn die Zentrierteile 88 wie vorliegend an das Blockierteil 86 angrenzen. Auf diese Weise kann zusätzlich zur Blockade in der Längsrichtung 42 eine Fixierung über die Zentrierteile 88 in der Querrichtung 44 erfolgen.

Ein jeweiliges Zentrierteil 88 ist aus einem einstückigen Materialzuschnitt aus Papiermaterial, insbesondere Wellpappe, gebildet. Beispielsweise sind mindestens drei Segmente 92 entlang Faltlinien 93 faltbar miteinander verbunden, bevorzugt vier Segmente 92 (Figur 14).

Der Ausnehmung 90 zugewandt weisen die Zentrierteile 88 eine größere Höhe auf als der Ausnehmung 90 abgewandt, so dass die Zentrierteile 88 in Richtung der benachbarten Längsseitenwand 48 in Richtung des Bodens 26 abfallen. Dadurch wird im Aufnahmeraum 52 seitlich neben dem Vorderrad 22 zusätzlicher Raum zum Aufnehmen von Motorradkomponenten oder -zubehör bereitgestellt.

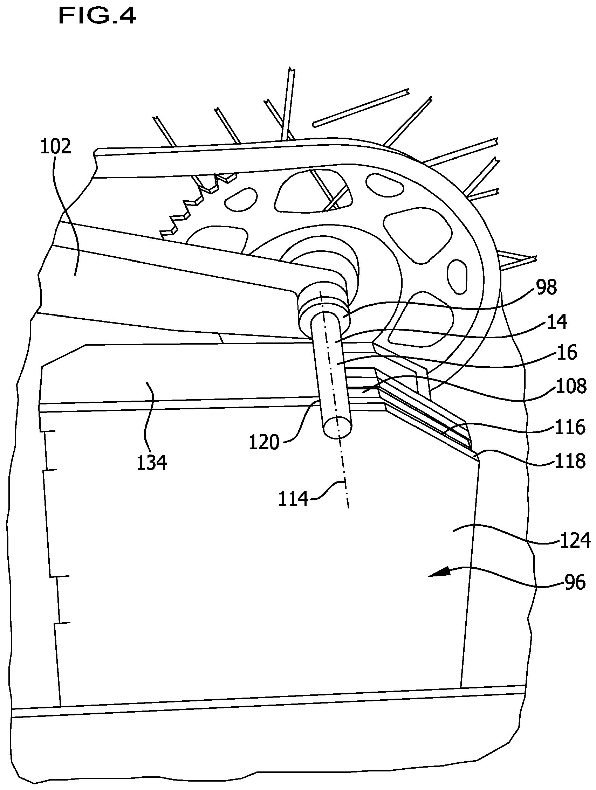

Der Stützkörper 14 erlaubt vorliegend in Kombination mit den nachfolgend erläuterten Stützteilen 96 der Vorrichtung 10, das Hinterrad 20 abzustützen und das Motorrad 18 gegen Verkippen in der Querrichtung 44 zu sichern. Der Stützkörper 14 ist angepasst an eine Hohlachse 98 des Hinterrades 20. Der Stützkörper 14 kann durch die Hohlachse 98 hindurchgeschoben werden und ist so bemessen, dass er auf beiden Seiten jeweils über die Hohlachse 98 hinaussteht. Figur 4 zeigt dies am Beispiel der linken Seite. Der Überstand des Stützkörpers 14 beträgt beispielsweise bevorzugt mindestens ungefähr 5 cm bis 20 cm, beispielsweise ungefähr 10 cm bis 15 cm.

Durch Aufnahme in der Hohlachse 98 ist der Stützkörper 14 in definierter vorgegebener Position am Hinterrad 20 angeordnet.

Anstelle des durch die Hohlachse 98 durchgeschobenen Stützkörpers 14 kann mindestens ein andersartiger Stützkörper vorgesehen sein. Denkbar ist beispielsweise, dass Stützkörper jeweils an einer Achse oder Nabe des Hinterrades 20 fixiert werden, beispielsweise auf diese aufgeschraubt werden. Dementsprechend können an den einander gegenüberliegenden Seiten des Hinterrades 20 zwei Stützkörper vorgesehen sein.

Wie insbesondere aus den Figuren 1 sowie 3 bis 7 deutlich wird, sind zwei Stützteile 96 vorgesehen. Die Stützteile 96 sind in der Querrichtung 44 voneinander beabstandet angeordnet. Zwischen den Stützteilen 96 ist ein Zwischenraum 100 angeordnet. Im Zwischenraum 100 kann das Hinterrad 20 angeordnet werden, einschließlich beispielsweise Rahmenteilen wie eines Abschnitts einer Schwinge 102, an der das Hinterrad 20 montiert ist.

Im vorliegenden Fall ist es günstig, dass die Stützteile 96 als Gleichteile ausgestaltet sind. Nachfolgend wird deswegen nur die Ausgestaltung eines der Stützteile 96 erläutert. Die diesbezüglichen Erläuterungen gelten auch für das weitere Stützteil 96.

Bezogen auf die Längsrichtung 82 sind die Stützteile 96 nahe der Querseite angeordnet, von der aus das Motorrad 18 auf den Boden 26 geschoben wird. Wirkt das Rampenteil 62 als Blockierteil 84, ist es in der Längsrichtung 82 den Stützteilen 96 benachbart. Beispielsweise sind die Stützteile 96 in der Längsrichtung 42 im Bereich eines hinteren Drittels, vorzugsweise im Bereich eines hinteren Viertels der Vorrichtung 10 angeordnet, bezogen auf die Ausrichtung des Motorrades 18 (Figur 2).

Das Stützteil 96 steht auf dem Boden 26 auf, insbesondere der Bodenwand 36. Zu diesem Zweck ist ein flächig ausgestaltetes Auflageelement 104 vorgesehen. Günstig ist es, wenn das Stützteil 96 relativ zum Boden 26 frei positionierbar ist. Beispielsweise kann abhängig von dem Typ des zu verpackenden Motorrades 18 das Stützteil 96 an geeigneter Position angeordnet werden, um eine bestmögliche Solllage für das Motorrad 18 zu erzielen.

Das Stützteil 96 umfasst mindestens einen Anbindeabschnitt 106. Vorliegend sind zwei Anbindeabschnitte 106 vorgesehen. Zum Fixieren des Stützteils 96 am Boden 26 kann vorzugsweise eine Verheftung durch die Anbindeabschnitte 106 hindurch vorgenommen werden. Klammern erstrecken sich günstigerweise bis in die Palette 34 hinein. Durch Verheften ist das Stützteil 96 zuverlässig am Boden 26 festgelegt.

Das Stützteil 96 umfasst an einer dem Boden 26 abgewandten Seite, insbesondere an einer Oberseite, ein Stützelement 108. Das Stützelement 108 ist aufgrund der nachfolgend erläuterten Ausgestaltung des Stützteils 96 mehrsegmentig ausgestaltet. Abschnittsweise ist das Stützelement 108 parallel zur Bodenwand 36 ausgerichtet.

Das Stützelement 108 umfasst ferner eine Ausnehmung 110 zum Aufnehmen des Stützkörpers 14. Die Ausnehmung 110 ist als Mulde ausgestaltet und definiert eine Achse 112. In korrekter Solllage des Stützteils 96 auf dem Boden 26 ist die Achse 112 in der Querrichtung 44 ausgerichtet. In korrekter Positionierung des Motorrades 18 fällt die Achse 112 mit einer vom Stützkörper 14 definierten Achse 114 zusammen.

Dem Stützelement 108 in der Einschubrichtung 64 vorgelagert, d. h. in Richtung der Einschubseite, an der das Rampenteil 62 angeordnet ist, umfasst das Stützteil 96 ein Rampenelement 116. Auch das Rampenelement 116 ist mehrsegmentig.

Das Rampenelement 116 steigt in der Einschubrichtung 64 betrachtet in der Höhenrichtung an. Ein dem Stützelement 108 abgewandter Anfangsabschnitt 118 ist im Abstand zur Bodenwand 36 angeordnet.

Eine Schräge des Rampenelementes 116 schließt mit einer von der Bodenwand 36 definierten Ebene einen Winkel von beispielsweise ungefähr 30° bis 70° ein. Im vorliegenden Ausführungsbeispiel beträgt der Winkel ungefähr 40°.

Dem Stützelement 108, insbesondere der Ausnehmung 110 in der Einschubrichtung 64 nachgelagert, d. h. an der der Einführseite abgewandten Seite, umfasst das Stützelement 96 ein Anschlagelement 120. Das Anschlagelement 120 wird beispielsweise durch eine Verlängerung des Randes der Ausnehmung 110 gebildet. Durch das Anschlagelement 120 ist der Stützkörper 14 gegen Bewegung in der Einschubrichtung 64 blockiert.

In Einschubrichtung 64 von der Einschubseite betrachtet umfasst das Stützteil 96 dementsprechend zunächst das Rampenelement 116, anschließend das Stützelement 108, hierbei zunächst dessen Abschnitt parallel zur Bodenwand 36 und danach die Ausnehmung 110, und zuletzt das Anschlagelement 120.

Beim Einschieben des Motorrads 18 wird das Hinterrad 20 auf die Bodenwand 36 gerollt. Der Stützkörper 14 gelangt zur Anlage am und insbesondere auf dem Rampenelement 116. Bei weiterer Bewegung des Motorrads 18 wird der Stützkörper 14 nach oben in Richtung des Stützelementes 108 geführt, bis er in die Ausnehmung 110 eingreift und in Einschubrichtung 64 am Anschlagelement 120 anschlägt.

Steht der Stützkörper 14 mit dem Stützteil 96 an der Ausnehmung 110 in einer Stützposition in Eingriff, kann ein Teil des Gewichtes des Motorrads 18 über die Stützteile 96 an den Boden 26 abgeleitet werden. Durch Vorsehen von zwei Stützteilen 96 auf einander abgewandten Seiten des Motorrads 18 wird zusätzlich eine Fixierung in der Querrichtung 44 erzielt. Dadurch ist das Motorrad 18 zuverlässig auf dem Boden 26 gehalten und nimmt eine definierte Solllage ein. Des Weiteren ist das Vorderrad 22 zwischen den Zentrierteilen 88 fixiert und nach vorne durch das Blockierteil 86 blockiert. Das Hinterrad 20 kann durch das Blockierteil 84 blockiert werden.

Greift der Stützkörper 14 in die Ausnehmung 110 ein, ist er parallel zur Ebene der Bodenwand 36 ausgerichtet.

Das Hinterrad 20 ist im vorliegenden Beispiel nicht über die Stützteile 96 und den Stützkörper 14 hängend aufgehängt. Stattdessen steht das Hinterrad 20 auch auf der Bodenwand 36 auf, über die ein Teil des Gewichts des Motorrads 18 aufgenommen wird. Dies hilft es, die Last zu verteilen und eine Überlastung der Stützteile 96 zu vermeiden.

Das Stützteil 96 ist vorliegend aus einem einteiligen Zuschnitt 122 (Figur 7) aus einem Papiermaterial gefertigt, insbesondere aus Wellpappe. Hierbei kommt vorzugsweise dreilagige Wellpappe zum Einsatz, um dem Stützteil 96 eine hinreichende Stabilität zu verleihen.

Wie insbesondere aus den Figuren 4 bis 6 hervorgeht, umfasst das Stützteil 96 eine Mehrzahl von in der Querrichtung 44 seitlich nebeneinander angeordneten Materiallagen 124. Hierbei liegen von vier Materiallagen 124 drei jeweils benachbarte Materiallagen 124 flächig aneinander an. Eine fünfte Materiallage 124 ist im Abstand zur nächstgelegenen Materiallage 124 angeordnet und ist zu dieser vorliegend im Winkel ausgerichtet.

Die Materiallagen 124 bilden jeweils gemeinsam die Segmente des Rampenelementes 116 und des Stützelementes 108 einschließlich des Bodens der Ausnehmung 110.

Die Materiallagen 124 sind jeweils in der Längsrichtung 42 und in der Höhenrichtung 40 erstreckt ausgebildet.

Die bei den im Abstand zueinander angeordneten Materiallagen 124 sind miteinander über ein Aussteifelement 126 des Stützteils 96 verbunden. Vorliegend sind zwei Aussteifelemente 126 vorgesehen, die in Längsrichtung 42 voneinander beabstandet sind. Jedes Aussteifelement 126 ist in der Höhenrichtung 40 und in der Querrichtung 44 erstreckt.

Das Aussteifelement 126 ist beispielsweise an einer Materiallage 124 faltbar gehalten. Mit mindestens einer weiteren Materiallage 124 ist das Aussteifelement 126 verbunden. Im vorliegenden Beispiel kommen zu diesem Zweck Laschen 128 zum Einsatz, die in korrespondierende Ausnehmungen 130 der mindestens einen weiteren Materiallage 124 eingreifen. Vorliegend greifen die Laschen 128 in zwei Materiallagen 124 ein (Figur 7).

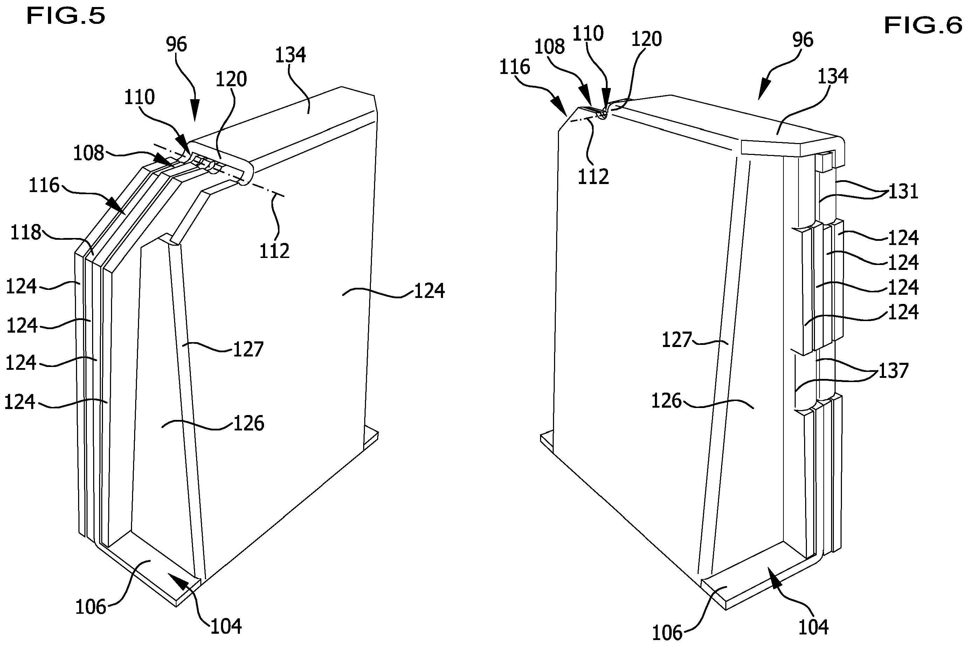

In der Längsrichtung 42 ragt das Auflageelement 104 über die Aussteifelemente 126 hinaus. Zu diesem Zweck ist diejenige Materiallage 124, die mit dem Aussteifelement 126 über die Faltlinie 127 verbunden ist, in der Längsrichtung 42 kürzer als die benachbarte Materiallage 124. Hierdurch wird der Anbindeabschnitt 106 freigelegt (Figuren 5 und 6).

Beim Stützteil 96 ist insbesondere vorgesehen, dass eine Steifigkeit in der Höhenrichtung 40 größer ist als in der Längsrichtung 42 und/oder in der Querrichtung 44. Günstig ist es, wenn ein Wellenkamm des Wellpappematerials in der Höhenrichtung 40 erstreckt ist. Auf diese Weise kann dem Stützteil 96 die erforderliche Steifheit zur Ableitung der Gewichtskraft auf die Bodenwand 36 verliehen werden.

Zum Auffalten des Stützteils 96 ausgehend von dem Zuschnitt 122 kann beispielsweise eine Materiallage 124a um ein Faltlinienpaar 131 (in der Zeichnung nach oben) auf eine weitere Materiallage 124b gefaltet werden. Parallel zueinander verlaufende Faltlinien 132 verbinden die zweite Materiallage 124b über einen Deckenabschnitt 134 des Stützteils 96 mit der Materiallage 124c, an der die Aussteifelemente 126 faltbar gehalten sind.

Das Auflageelement 104 ist über parallel zueinander verlaufende Faltlinien 136 mit der letztgenannten Materiallage 124c faltbar verbunden sowie einer weiteren Materiallage 124d. Diese und das Aufstellelement 104 werden im vorliegenden Beispiel aus der Zeichenebene nach oben geschwenkt. Über ein weiteres Faltlinienpaar 137 ist die letzte der Materiallagen 124e an die zuvor erwähnte Materiallage 124d angebunden. Sie kann nach oben aus der Zeichenebene heraus oder nach unten in die Zeichenebene hinein verschwenkt werden.

Laschen 138 an der Materiallage 124b können zum Fixieren des Stützteils 96 in sich in einer Gebrauchsstellung in Ausnehmungen 139 zwischen dem Auflageelement 104 und der Materiallage 124d und/oder 124e eingreifen.

In Figur 7 sind die einzelnen Segmente des Stützelementes 108, der Ausnehmung 110 und des Rampenelementes 116 mit dem jeweiligen Bezugszeichen gekennzeichnet.

Die Aussteifelemente 126 sind vorliegend in Längsrichtung 42 betrachtet im Wesentlichen trapezförmig. Aus diesem Grund sind die im Abstand zueinander angeordneten Materiallagen 124 nicht-parallel zueinander ausgerichtet, sondern im Winkel zueinander ausgerichtet. Die Materiallage 124 (124c), an der die Aussteifelemente 126 angebunden sind, ist vorliegend relativ zur Normalen bezüglich des Bodens 26 geneigt. Dadurch verbreitert sich das Stützteil 96 von oben nach unten, und die Gewichtskraft kann auf eine größere Fläche abgeleitet werden.

Durch die Verbreiterung des Stützteils 96 von oben nach unten weist dieses näherungsweise eine Pyramidenstumpfform auf.

Das Stützteil 96 ist so bemessen, dass das Stützelement 108 und der Stützkörper 14 in einem Abstand von ungefähr 20 cm bis ungefähr 50 cm oberhalb der Bodenwand 36 angeordnet sind. Als vorteilhaft kann sich zum Beispiel ein Abstand von ca. 25 cm bis 45 cm erweisen, vorzugsweise ca. 30 cm bis 40 cm.

Insbesondere können bei dem Verpackungssystem 12 oder der Vorrichtung 10 Stützteile 96 vorgesehen sein, die funktionsgleich ausgestaltet sind, sich aber hinsichtlich ihrer Höhe voneinander unterscheiden, um eine möglichst genaue Anpassung an den Typ des Motorrads 18 zu ermöglichen.

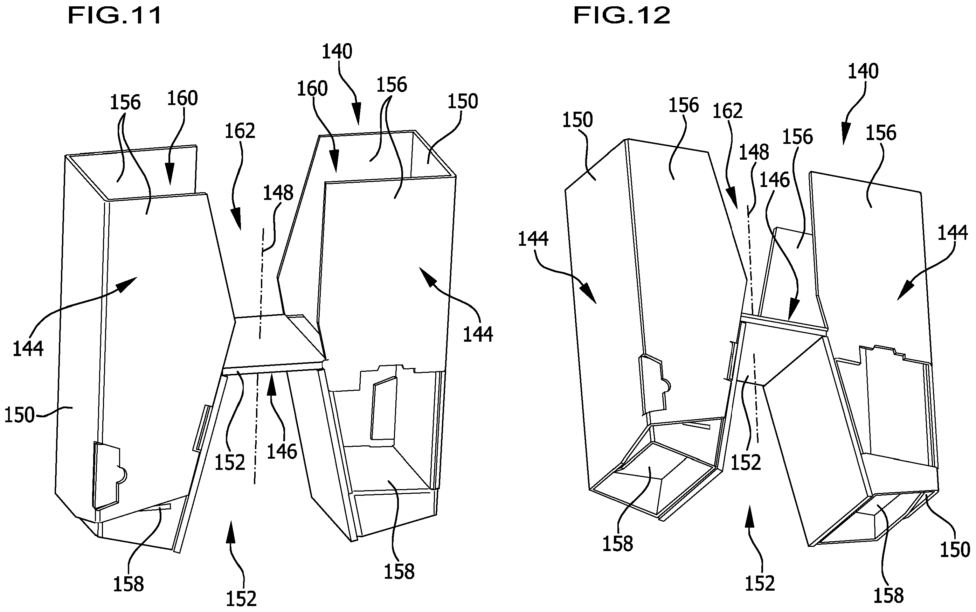

Um das Motorrad 18 im Aufnahmeraum 52 zu fixieren, umfasst die Vorrichtung 10 ferner ein Fixierteil 140, das nachfolgend unter Bezugnahme insbesondere auf die Figuren 1, 2 sowie 11 bis 13 erläutert wird.

Das Fixierteil 140 kann über das Motorrad 18 gestülpt werden, speziell über einen Motorradsitz 142.

Das Fixierteil 140 umfasst zwei in der Querrichtung 44 im Abstand zueinander angeordnete Stützabschnitte 144, die über einen Verbindungsabschnitt 146 miteinander verbunden sind.

Günstig ist es im vorliegenden Fall, dass das Fixierteil 140 insgesamt spiegelsymmetrisch bezüglich einer Symmetrieachse 148 ausgestaltet ist. Die Symmetrieachse 148 verläuft mittig durch den Verbindungsabschnitt 146 und ist senkrecht zu einer von diesem definierten Ebene ausgerichtet.

Durch die Symmetrie kann der Benutzer das Fixierteil 140 in zwei Orientierungen bei jeweils identischer Wirkungsweise über das Motorrad 18 stülpen, ohne dass der Benutzer auf die Orientierung achten muss.

Ein jeweiliger Stützabschnitt 144 umfasst ein Anlageelement 150. Über das Anlageelement 150 kann das Fixierteil 140 flächig an der Längsseitenwand 48 anliegen. Insgesamt besteht dadurch die Möglichkeit, das Fixierteil 140 formschlüssig zwischen den Längsseitenwänden 48 in der Querrichtung 44 zu fixieren.

Über den Verbindungsabschnitt 146 kann das Fixierteil 140 darüber hinaus auf dem Motorrad 18 aufliegen und ist in der Höhenrichtung 40 fixiert. Vorliegend ist der Verbindungsabschnitt 146 ein Auflageelement 152, das parallel zur Bodenwand 36 ausgerichtet ist.

Unterhalb des Verbindungsabschnittes 146 ist eine Aussparung 154 gebildet, die in der Querrichtung 44 von den Stützabschnitten 144 begrenzt ist. Die Aussparung 154 erweitert sich in Richtung auf den Boden 26. Umgekehrt formuliert verjüngt sich die Aussparung 154 nach oben in der Höhenrichtung 40. In Längsrichtung 42 betrachtet ist die Aussparung 154 ungefähr trapezförmig.

Die sich erweiternde Aussparung 154 erlaubt auf konstruktiv einfache Weise eine Anpassung der Position des Fixierteils 140 an Motorräder 18 unterschiedlichen Typs.

Ein jeweiliger Stützabschnitt 144 umfasst in Längsrichtung 42 zwei voneinander beabstandete Seitenwände 156 und ferner eine Bodenwand 158. Die Seitenwände 156 und die Bodenwand 158 begrenzen einen jeweiligen Aufnahmeraum 160 des Stützabschnittes 144. Im Aufnahmeraum 160 können beispielsweise Motorradteile oder -zubehör aufgenommen werden.

Oberhalb des Verbindungsabschnittes 146 ist zwischen den Stützabschnitten 144 eine weitere Aussparung 162 gebildet. Durch die Aussparung 162 hindurch können beispielsweise längere Motorradteile hindurchgeführt werden. Beispielsweise kann der demontierte Lenker durch die Aussparung 162 geführt und obenseitig auf dem Motorradsitz 142 abgelegt werden.

Figur 13 zeigt einen einteiligen Zuschnitt 164 für das Fixierteil 140 aus einem Papiermaterial, insbesondere Wellpappe. Das Fixierteil 140 kann von dem Zuschnitt 164 durch Auffalten in eine Gebrauchsstellung überführt und in sich in der Gebrauchsstellung fixiert werden.

Das Fixierteil 140 kann vorzugsweise einen Niederhalter ausbilden, der obenseitig am Deckel 30 abgestützt ist. Dies ermöglicht eine zusätzliche Fixierung des Motorrads 18 in der Höhenrichtung 40.

Es versteht sich, dass zum Schutz während des Transports Polster zwischen dem Motorrad 18 und Komponenten der Vorrichtung 10 angeordnet sein können.

Es versteht sich ferner, dass abweichend von dem dargestellten Geländemotorrad alternativ ein Motorrad 18 andersartigen Typs oder ein andersartiger Typ Zweirad verpackt werden könnte.

### Bezugszeichenliste:

- 10: Verpackungsvorrichtung (Vorrichtung)
- 12: Verpackungssystem
- 14: Stützkörper
- 16: Rohr/Stange
- 18: Motorrad
- 20: Hinterrad
- 22: Vorderrad
- 24: Verpackungsbehälter
- 26: Boden
- 28: Mantel
- 30: Deckel
- 32: Aufstellfläche
- 34: Palette
- 36: Bodenwand
- 38: Rand
- 40: Höhenrichtung
- 42: Längsrichtung
- 44: Querrichtung
- 46: Mantelteil
- 48: Längsseitenwand
- 50: Querseitenwand
- 52: Aufnahmeraum
- 54: Deckenwand
- 56: Rand
- 58: Versteifungselement
- 60: Verbindungselement
- 62: Rampenteil
- 64: Einschubrichtung
- 66: Rampenelement
- 68: Auflageelement
- 70: Stützelement
- 72: Zuschnitt
- 74: Faltlinie
- 75: Segment
- 76: Lasche
- 77: Ausnehmung
- 78: Aussteifung
- 80: Stützglied
- 81: Faltlinie
- 82: Halteglied
- 83: Rand
- 84: Blockierteil
- 86: Blockierteil
- 88: Zentrierteil
- 90: Ausnehmung
- 92: Segment
- 93: Faltlinie
- 96: Stützteil
- 98: Hohlachse
- 100: Zwischenraum
- 102: Schwinge
- 104: Auflageelement
- 106: Anbindeabschnitt
- 108: Stützelement
- 110: Ausnehmung
- 112: Achse
- 114: Achse
- 116: Rampenelement
- 118: Anfangsabschnitt
- 120: Anschlagelement
- 122: Zuschnitt
- 124: Materiallage
- 126: Aussteifelement
- 127: Faltlinie
- 128: Lasche
- 130: Ausnehmung
- 131: Faltlinienpaar
- 132: Faltlinie
- 134: Deckenabschnitt
- 136: Faltlinie
- 137: Faltlinienpaar
- 138: Lasche
- 139: Ausnehmung
- 140: Fixierteil
- 142: Motorradsitz
- 144: Stützabschnitt
- 146: Verbindungsabschnitt
- 148: Symmetrieachse
- 150: Anlageelement
- 152: Auflageelement
- 154: Aussparung
- 156: Seitenwand
- 158: Bodenwand
- 160: Aufnahmeraum
- 162: Aussparung
- 164: Zuschnitt

## Patentansprüche

1. Verpackungssystem für ein Zweirad, insbesondere für ein Motorrad (18), umfassend eine Verpackungsvorrichtung (10) und einen Stützkörper (14), wobei die Verpackungsvorrichtung (10) entlang einer Längsrichtung (42) und einer Querrichtung (44) erstreckt ist, die quer und insbesondere senkrecht zur Längsrichtung (42) ausgerichtet ist, die Verpackungsvorrichtung (10) umfassend:
einen Boden (26) und zwei in der Querrichtung (44) voneinander beabstandete Stützteile (96), die auf dem Boden (26) aufstehen und in einer Höhenrichtung (40) erstreckt sind, die quer und insbesondere senkrecht zur Längsrichtung (42) und zur Querrichtung (44) ausgerichtet ist, wobei zwischen den Stützteilen (96) ein Zwischenraum (100) angeordnet ist,
wobei die Stützteile (96) an ihrer dem Boden (26) abgewandten Seite im Abstand zu diesem jeweils ein Stützelement (108) umfassen oder ausbilden zum Abstützen des Stützkörpers (14), der in vorgegebener oder vorgebbarer Position an einer Radnabe oder Achse (98) eines Rads (20) des Zweirads angeordnet und gehalten ist, wobei der Stützkörper (14) auf dem jeweiligen Stützelement (108) des Stützteils (96) aufliegen kann und eine Auflagekraft des Stützkörpers (14) über das Stützteil (96) auf den Boden (26) ableitbar ist, **dadurch gekennzeichnet, dass** :
- die Stützteile (96) aus einem Papiermaterial gefertigt sind, insbesondere aus Wellpappe;
- die Stützteile (96) eine Mehrzahl von in der Querrichtung (44) seitlich nebeneinander positionierten, einander überlappenden flächigen Materiallagen (124) umfassen, wobei zwei oder mehr benachbarte Materiallagen (124) aneinander flächig anliegen;
- die Stützteile (96) ein in der Höhenrichtung (40) ansteigendes Rampenelement (116) umfassen, an und insbesondere auf dem der Stützkörper (14) anliegen und in der Längsrichtung (42) in Richtung des Stützelementes (108) geführt werden kann; und
- die Stützteile (96) ein flächiges Auflageelement (104) umfassen oder ausbilden und über das Auflageelement (104) flächig auf dem Boden (26) aufliegen.

2. Verpackungssystem nach Anspruch 1, **dadurch gekennzeichnet, dass** die Stützteile (96) ausgehend von einem flachen Zuschnitt (122) des Papiermaterials in eine Gebrauchsstellung aufrichtbar sind.

3. Verpackungssystem nach Anspruch 1 oder 2, **dadurch gekennzeichnet, dass** die Stützteile (96) am Boden (26) festgelegt oder festlegbar sind, wobei das Stützteil (96) mindestens eine Lasche oder einen Anbindeabschnitt (106) umfasst oder ausbildet, durch die/den hindurch das Stützteil (96) mit dem Boden (26) verheftbar ist.

4. Verpackungssystem nach einem der voranstehenden Ansprüche, **dadurch gekennzeichnet, dass** die Stützelemente (108) eine Ausnehmung (110) zum Aufnehmen des Stützkörpers (14) umfassen, der in einer Stützposition des Zweirads mit der Ausnehmung (110) in Eingriff steht, wobei die Ausnehmung (110) insbesondere eine in der Querrichtung (44) erstreckte Mulde ist.

5. Verpackungssystem nach einem der voranstehenden Ansprüche, **dadurch gekennzeichnet, dass** die Stützteile (96) ein in der Längsrichtung (42) wirksames Anschlagelement (120) für den Stützkörper (14) umfassen, das insbesondere an der dem Rampenelement (116) abgewandten Seite des Stützelementes (108) angeordnet ist.

6. Verpackungssystem nach einem der voranstehenden Ansprüche, **dadurch gekennzeichnet, dass** zwei oder mehr Materiallagen (124) miteinander verbunden sind und/oder dass Wellenkämme der Materiallagen (124) des Wellpappematerials in der Höhenrichtung (40) verlaufen.

7. Verpackungssystem nach einem der voranstehenden Ansprüche, **dadurch gekennzeichnet, dass** die Stützteile (96) mindestens ein beispielsweise in der Höhenrichtung (40) und der Querrichtung (44) erstrecktes Aussteifelement (126) umfassen, über das zwei im Abstand zueinander angeordnete oder im Winkel zueinander ausgerichtete Materiallagen (124) miteinander verbunden sind.

8. Verpackungssystem nach einem der voranstehenden Ansprüche, **dadurch gekennzeichnet, dass** die Verpackungsvorrichtung (10) mindestens ein Blockierteil (84, 86) zum Anlegen an ein Rad (20, 22) des Zweirades und zum Sichern einer Bewegung des Zweirades gegen eine Bewegung in der Längsrichtung (42) umfasst, insbesondere dass zwei Blockierteile (84, 86) vorgesehen sind, die an das Vorderrad (22) und an das Hinterrad (20) des Zweirads angelegt oder anlegbar sind.

9. Verpackungssystem nach einem der voranstehenden Ansprüche, **dadurch gekennzeichnet, dass** die Verpackungsvorrichtung (10) ein Rampenteil (62) umfasst, das in der Längsrichtung (42) seitlich an den Boden (26) anlegbar und in der Querrichtung (44) erstreckt ausgebildet ist und ein Rampenelement (66) umfasst, über das hinweg das Zweirad von einer Aufstellfläche (32) für die Verpackungsvorrichtung (10) auf den Boden (26) aufschiebbar ist.

10. Verpackungssystem nach einem der voranstehenden Ansprüche, **dadurch gekennzeichnet, dass** die Verpackungsvorrichtung (10) mehrere Paare von funktionsgleichen, aber hinsichtlich ihrer Größe unterschiedlichen Stützteilen (96) umfasst, wobei abhängig vom zu verpackenden Zweirad ein Paar von Stützteilen auswählbar ist.

11. Verpackungssystem nach einem der voranstehenden Ansprüche, **dadurch gekennzeichnet, dass** zumindest eines der Folgenden gilt:
- der Boden (26) umfasst eine Bodenwand (36) und/oder mindestens eine Palette (34), oberhalb derer in der Höhenrichtung (40) eine Bodenwand (36) des Bodens (26) angeordnet ist;
- die Verpackungsvorrichtung (10) umfasst oder bildet einen Verpackungsbehälter (24), der den Boden (26) und einen von diesem abstehenden Mantel (28) umfasst.

12. Verpackungssystem nach einem der voranstehenden Ansprüche, **dadurch gekennzeichnet, dass** die Verpackungsvorrichtung (10) einen vom Boden (26) abstehenden Mantel (28) umfasst, wobei der Mantel (28) in der Längsrichtung (42) verlaufend mindestens eine Längsseitenwand (48) umfasst und/oder in der Querrichtung (44) verlaufend mindestens eine Querseitenwand (50), wobei der Mantel (28) einen Aufnahmeraum (52) der Verpackungsvorrichtung (10) zumindest teilweise einfasst.

13. Verpackungssystem nach einem der voranstehenden Ansprüche, **dadurch gekennzeichnet, dass** die Verpackungsvorrichtung (10) ein Fixierteil (140) umfasst, das zwei in der Querrichtung (44) voneinander beabstandete Stützabschnitte (144) umfasst, die über einen Verbindungsabschnitt (146) in der Querrichtung (44) miteinander verbunden sind, wobei zwischen den Stützabschnitten (144) eine Aussparung (154) gebildet ist, die in der Höhenrichtung (42) vom Verbindungsabschnitt (146) begrenzt und in Richtung des Bodens (26) geöffnet ist.

14. Verpackungssystem nach Anspruch 13 in Verbindung mit Anspruch 12, **dadurch gekennzeichnet, dass** zumindest eines der Folgenden gilt:
- die Stützabschnitte (144) umfassen Anlageelemente (150), die flächig an einander gegenüberliegenden Seitenwänden (48) des Mantels (28) anliegen;
- mindestens ein Stützabschnitt (144), vorzugsweise beide Stützabschnitte (144), umfasst zwei in der Längsrichtung (42) voneinander beabstandete Seitenwände (156) und eine Bodenwand (158), die gemeinsam einen Aufnahmeraum (160) des Stützabschnittes (144) begrenzen.

15. Verpackungssystem nach einem der voranstehenden Ansprüche, **dadurch gekennzeichnet, dass** der Stützkörper (14) ein(e) durch eine Hohlachse (98) des Zweirads hindurchgeführte Stange (16) oder Rohr ist.

## Claims

1. Packaging system for a two-wheeler, in particular for a motorcycle (18), comprising a packaging device (10) and a support body (14), wherein the packaging device (10) extends in a longitudinal direction (42) and a transverse direction (44) oriented transversely and in particular perpendicularly to the longitudinal direction (42), the packaging device (10) comprising:
a base (26) and two support parts (96), which support parts are spaced apart from one another in the transverse direction (44) and stand on the base (26) and extend in a vertical direction (40) oriented transversely and in particular perpendicularly to the longitudinal direction (42) and to the transverse direction (44), wherein a gap (100) is located between the support parts (96), wherein the support parts (96), on the side thereof facing away from the base (26) and at a distance therefrom, each comprise or form a support element (108) for supporting the support body (14), which support body is arranged and held in a predetermined or predeterminable position on a wheel hub or axle (98) of a wheel (20) of the two-wheeler, wherein the support body (14) is configured to rest on the respective support element (108) of the support part (96) and a supporting force of the support body (14) is transferable to the base (26) via the support part (96), **characterized in that:**
- the support parts (96) are made of a paper material, in particular of corrugated cardboard;
- the support parts (96) comprise a plurality of overlapping flat material layers (124) positioned laterally next to one another in the transverse direction (44), wherein two or more adjacent material layers (124) rest flatly against one another;
- the support parts (96) comprise a ramp element (116) rising in the vertical direction (40), against and in particular on which the support body (14) is configured to rest and is guideable in the longitudinal direction (42) toward the support element (108); and
- the support parts (96) comprise or form a flat supporting element (104) and rest flatly on the base (26) by means of the supporting element (104).

2. Packaging system in accordance with claim 1, **characterized in that** the support parts (96), projecting from a flat blank (122) of the paper material, are erectable into a use position.

3. Packaging system in accordance with claim 1 or 2, **characterized in that** the support parts (96) are fixed or are fixable to the base (26), wherein the support part (96) comprises or forms at least one tab or one attachment portion (106) through which the support part (96) is fastenable to the base (26).

4. Packaging system in accordance with any one of the preceding claims, **characterized in that** the support elements (108) comprise a cutout (110) for receiving the support body (14), which support body engages with the cutout (110) in a support position of the two-wheeler, wherein the cutout (110) is in particular a trough extending in the transverse direction (44).

5. Packaging system in accordance with any one of the preceding claims, **characterized in that** the support parts (96) comprise a stop element (120) for the support body (14), which stop element is effective in the longitudinal direction (42) and is arranged in particular on the side of the support element (108) facing away from the ramp element (116).

6. Packaging system in accordance with any one of the preceding claims, **characterized in that** two or more material layers (124) are connected to one another and/or that corrugation ridges of the material layers (124) of the corrugated cardboard material run in the vertical direction (40).

7. Packaging system in accordance with any one of the preceding claims, **characterized in that** the support parts (96) comprise at least one stiffening element (126) extending, for example, in the vertical direction (40) and the transverse direction (44), by means of which stiffening element two material layers (124) arranged at a distance from one another or oriented at an angle to one another are connected to one another.

8. Packaging system in accordance with any one of the preceding claims, **characterized in that** the packaging device (10) comprises at least one blocking part (84, 86) for applying to a wheel (20, 22) of the two-wheeler and for securing a movement of the two-wheeler against a movement in the longitudinal direction (42), in particular **in that** two blocking parts (84, 86) are provided which are applied or are applicable to the front wheel (22) and to the rear wheel (20) of the two-wheeler.

9. Packaging system in accordance with any one of the preceding claims, **characterized in that** the packaging device (10) comprises a ramp part (62) which is laterally placeable on the base (26) in the longitudinal direction (42) and extends in the transverse direction (44) and comprises a ramp element (66) over which the two-wheeler is pushable onto the base (26) from a set-down surface (32) for the packaging device (10).

10. Packaging system in accordance with any one of the preceding claims, **characterized in that** the packaging device (10) comprises a plurality of pairs of support parts (96) which are functionally identical but differ in size, wherein a pair of support parts is selectable depending on the two-wheeler to be packaged.

11. Packaging system in accordance with any one of the preceding claims, **characterized in that** at least one of the following applies:
- the base (26) comprises a base wall (36) and/or at least one pallet (34), above which, in the vertical direction (40), a base wall (36) of the base (26) is arranged;
- the packaging device (10) comprises or forms a packaging container (24) which comprises the base (26) and a casing (28) projecting therefrom.

12. Packaging system in accordance with any one of the preceding claims, **characterized in that** the packaging device (10) comprises a casing (28) projecting from the base (26), wherein the casing (28) comprises at least one longitudinal side wall (48) extending in the longitudinal direction (42) and/or at least one transverse side wall (50) extending in the transverse direction (44), wherein the casing (28) at least partially encloses a receiving space (52) of the packaging device (10).

13. Packaging system in accordance with any one of the preceding claims, **characterized in that** the packaging device (10) comprises a fixing part (140) which comprises two support portions (144) which are spaced apart from one another in the transverse direction (44) and which are connected to one another in the transverse direction (44) by means of a connecting portion (146), wherein a recess (154) is formed between the support portions (144), which recess is delimited in the vertical direction (42) by the connecting portion (146) and is open toward the base (26).

14. Packaging system in accordance with claim 13 in conjunction with claim 12, **characterized in that** at least one of the following applies:
- the support portions (144) comprise contact elements (150) which rest flatly against opposite side walls (48) of the casing (28);
- at least one support portion (144), preferably both support portions (144), comprises two side walls (156), spaced apart from one another in the longitudinal direction (42), and a base wall (158), which together delimit a receiving space (160) of the support portion (144).

15. Packaging system in accordance with any one of the preceding claims, **characterized in that** the support body (14) is a rod (16) or tube passed through a hollow axle (98) of the two-wheeler.

## Revendications

1. Système d'emballage pour un deux-roues, en particulier pour une moto (18), comprenant un dispositif d'emballage (10) et un corps de support (14), le dispositif d'emballage (10) s'étendant le long d'une direction longitudinale (42) et d'une direction transversale (44) qui est orientée transversalement et en particulier perpendiculairement à la direction longitudinale (42), le dispositif d'emballage (10) comprenant :
un fond (26) et deux parties de support (96) espacés l'un de l'autre dans la direction transversale (44), qui sont dressés sur le fond (26) et s'étendent dans une direction verticale (40) qui est orientée transversalement et en particulier perpendiculairement à la direction longitudinale (42) et à la direction transversale (44), un espace intermédiaire (100) étant disposé entre les parties de support (96), les parties de support (96) comprenant ou formant, sur leur côté opposé au fond (26) et à distance de celui-ci, un élément de support (108) destiné à supporter le corps de support (14), qui est disposé et maintenu dans une position prédéfinie ou prédéfinissable sur un moyeu de roue ou un essieu (98) d'une roue (20) du deux-roues, le corps de support (14) pouvant reposer sur l'élément de support (108) correspondant de la partie de support (96) et une force d'appui du corps de support (14) pouvant être transmise au fond (26) par l'intermédiaire de la partie de support (96), **caractérisé en ce que**
- les parties de support (96) sont fabriqués à partir d'un matériau en papier, en particulier en carton ondulé ;
- les parties de support (96) comprennent une pluralité de couches de matériau (124) planes, positionnées latéralement les unes à côté des autres dans la direction transversale (44) et se chevauchant, deux ou plusieurs couches de matériau (124) adjacentes étant en contact plan les unes avec les autres ;
- les parties de support (96) comprennent un élément de rampe (116) s'élevant dans la direction verticale (40), contre lequel et en particulier sur lequel le corps de support (14) repose et peut être guidé dans la direction longitudinale (42) en direction de l'élément de support (108) ; et
- les parties de support (96) comprennent ou forment un élément d'appui plat (104) et reposent à plat sur le fond (26) par l'intermédiaire de l'élément d'appui (104).

2. Système d'emballage selon la revendication 1, **caractérisé en ce que** les parties de support (96) peuvent être redressées en position d'utilisation à partir d'une découpe plate (122) du matériau en papier.

3. Système d'emballage selon la revendication 1 ou 2, **caractérisé en ce que** les parties de support (96) sont fixées ou peuvent être fixées au fond (26), la partie de support (96) comprenant ou formant au moins une languette ou une partie de fixation (106) à travers laquelle la partie de support (96) peut être fixée au fond (26).

4. Système d'emballage selon l'une des revendications précédentes, **caractérisé en ce que** les éléments de support (108) comprennent un évidement (110) destiné à recevoir le corps de support (14), qui, dans une position de support du deux-roues, s'engage dans l'évidement (110), l'évidement (110) étant en particulier une cavité s'étendant dans la direction transversale (44).

5. Système d'emballage selon l'une des revendications précédentes, **caractérisé en ce que** les parties de support (96) comprennent un élément de butée (120) agissant dans la direction longitudinale (42) pour le corps de support (14), qui est disposé en particulier sur le côté de l'élément de support (108) opposé à l'élément de rampe (116).

6. Système d'emballage selon l'une des revendications précédentes, **caractérisé en ce que** deux ou plusieurs couches de matériau (124) sont reliées entre elles et/ou **en ce que** les crêtes ondulées des couches (124) du matériau en carton ondulé s'étendent dans la direction verticale (40).

7. Système d'emballage selon l'une des revendications précédentes, **caractérisé en ce que** les parties de support (96) comprennent au moins un élément de renfort (126) s'étendant par exemple dans la direction verticale (40) et dans la direction transversale (44), par l'intermédiaire duquel deux couches de matériau (124) agencées à distance l'une de l'autre ou orientées angulairement l'une par rapport à l'autre sont reliées entre elles.

8. Système d'emballage selon l'une des revendications précédentes, **caractérisé en ce que** le dispositif d'emballage (10) comprend au moins une partie de blocage (84, 86) destinée à être appliquée contre une roue (20, 22) du deux-roues et à empêcher un mouvement du deux-roues dans la direction longitudinale (42), en particulier **en ce que** deux parties de blocage (84, 86) sont prévues, qui sont appliquées ou peuvent être appliquées contre la roue avant (22) et contre la roue arrière (20) du deux-roues.

9. Système d'emballage selon l'une des revendications précédentes, **caractérisé en ce que** le dispositif d'emballage (10) comprend une partie de rampe (62) qui est conçue de manière à pouvoir être appliquée latéralement contre le fond (26) dans la direction longitudinale (42) et s'étend dans la direction transversale (44), et qui comprend un élément de rampe (66) sur lequel le deux-roues peut être poussé depuis une surface de mise en place (32) pour le dispositif d'emballage (10) sur le fond (26).

10. Système d'emballage selon l'une des revendications précédentes, **caractérisé en ce que** le dispositif d'emballage (10) comprend plusieurs paires de parties de support (96) de fonction identique mais de tailles différentes, une paire d'éléments de support pouvant être sélectionnée en fonction du deux-roues à emballer.

11. Système d'emballage selon l'une des revendications précédentes, **caractérisé en ce qu'**au moins l'une des caractéristiques suivantes s'applique :
- le fond (26) comprend une paroi de fond (36) et/ou au moins une palette (34) au-dessus de laquelle est disposée, dans la direction verticale (40), une paroi de fond (36) du fond (26) ;
- le dispositif d'emballage (10) comprend ou forme un récipient d'emballage (24) qui comprend le fond (26) et une enveloppe (28) qui s'étend à partir de celui-ci.

12. Système d'emballage selon l'une des revendications précédentes, **caractérisé en ce que** le dispositif d'emballage (10) comprend une enveloppe (28) faisant saillie à partir du fond (26), l'enveloppe latérale (28) comprenant, dans la direction longitudinale (42), au moins une paroi latérale longitudinale (48) et/ou, dans la direction transversale (44), au moins une paroi latérale transversale (50), l'enveloppe (28) entourant au moins partiellement un espace de réception (52) du dispositif d'emballage (10).

13. Système d'emballage selon l'une des revendications précédentes, **caractérisé en ce que** le dispositif d'emballage (10) comprend une partie de fixation (140) qui comprend deux sections de support (144) espacées l'une de l'autre dans la direction transversale (44) et reliées entre elles par une section de liaison (146) dans la direction transversale (44), un évidement (154) étant formé entre les sections de support (144), lequel est délimité dans la direction verticale (42) par la section de liaison (146) et est ouvert en direction du fond (26).

14. Système d'emballage selon la revendication 13 en liaison avec la revendication 12, **caractérisé en ce qu'**au moins l'une des caractéristiques suivantes s'applique :
- les sections de support (144) comprennent des éléments d'appui (150) qui s'appuient à plat contre des parois latérales (48) opposées de l'enveloppe (28) ;
- au moins une section de support (144), de préférence les deux sections de support (144), comprend ou comprennent deux parois latérales (156) espacées l'une de l'autre dans la direction longitudinale (42) et une paroi de fond (158) qui délimitent ensemble un espace de réception (160) de la section de support (144).

15. Système d'emballage selon l'une des revendications précédentes, **caractérisé en ce que** le corps de support (14) est une tige (16) ou un tube traversé par un axe creux (98) du deux-roues.
